# EUROPÄISCHE PATENTSCHRIFT

(11) **EP 0 788 946 B1**
(45) Veröffentlichungstag und Bekanntmachung des Hinweises auf die Patenterteilung: **24.10.2001**
(21) Anmeldenummer: 96112654.7
(22) Anmeldetag: 06.08.1996
(51) Int. Cl.: B60R 25/00, B60R 25/04

(54) **Verfahren und Einrichtung zur Einprogrammierung von Betriebsdaten in Fahrzeugbauteile**
Method and apparatus for programming operational data into automotive parts
Procédé et dispositif pour la programmation de données opérationnelles dans des pièces de voitures

(30) Priorität: 31.08.1995 DE 19532067
(43) Veröffentlichungstag der Anmeldung: 13.08.1997
(73) Patentinhaber: DaimlerChrysler AG, 70567 Stuttgart (DE)
(72) Erfinder: Brinkmeyer, Horst, Dr., 71336 Waiblingen (DE); Schwegler, Günter, 71384 Weinstadt (DE); Althen, Brigitte, 53117 Bonn (DE); Krüger, Bertolt, Dr., 53127 Bonn (DE); Klein, Konrad, Dr., 73760 Ostfildern (DE); Krehbiehl, Thomas, 73650 Winterbach (DE); Metsch, Günther, Dr., 71696 Möglingen (DE)

(56) Entgegenhaltungen:
- EP-A- 0 723 896
- DE-A- 4 333 474
- DE-A- 4 338 033
- DE-A- 4 342 641
- DE-A- 4 415 052
- GB-A- 2 274 347
- GB-A- 2 285 702

## Beschreibung

Die Erfindung bezieht sich auf ein Verfahren und eine Einrichtung zur Einprogrammierung von Daten in Fahrzeugbauteile, wobei diese Daten von dem jeweiligen Fahrzeugbauteil benötigt werden, wenn dieses in dem betreffenden Fahrzeug in einer gewünschten, ordnungsgemäßen Weise in Betrieb gehen soll. Das Verfahren und die Einrichtung eignen sich insbesondere dazu, Fahrzeugersatzteile zu dem Zeitpunkt mit den erforderlichen fahrzeugbezogenen Daten zu versorgen, zu dem ihr Einsatz in einem bestimmten Fahrzeug beabsichtigt ist. Von besonderem Interesse sind vorliegend geheime Daten, die Teil eines Fahrzeugdiebstahlschutzsystems sind. Der Begriff Fahrzeugbauteil ist vorliegend in einem weiten Sinn dahingehend zu verstehen, daß davon neben fest im Fahrzeug eingebauten Bauteilen auch andere fahrzeugbezogene Bauteile, insbesondere Fahrzeugschlüssel, umfaßt sind.

Um einen komfortablen, möglichst weltweiten Service für Kraftfahrzeuge zur Verfügung zu stellen, ist die schnelle, möglichst weltweite Versorgung mit Fahrzeugbauteilen, insbesondere Ersatzteilen, eine wichtige Aufgabe. Neben der Versorgung entsprechender Servicestellen mit der erforderlichen Fahrzeugbauteil-Hardware ergibt sich eine weitere Aufgabe im Zusammenhang mit Bauteilen, bei denen es sich um elektronische Fahrzeugkomponenten handelt, die für einen ordnungsgemäßen Betrieb fahrzeugspezifische Daten enthalten müssen. Um eine schnelle Lieferfähigkeit zu gewährleisten, bietet sich die Einprogrammierung der erforderlichen Daten in solche Fahrzeugbauteile vor Ort an. Dabei werden die fahrzeugbezogenen Daten von einer jeweiligen Servicestelle bei einer Zentrale angefordert und von letzterer über eine Datenübertragungstrecke, z.B. ein Telefonverbindungsnetz, ein allgemeines oder individuelles Datennetz, oder einen Datenträgertransport, an die Servicestelle übermittelt, um dort mit Hilfe einer geeigneten Elektronik in das betreffende Fahrzeugbauteil eingespeist zu werden.

Diese Vorgehensweise ist ohne Schwierigkeit einsetzbar, solange die zu übertragenden Daten nicht geheim sind. Handelt es sich jedoch um geheime Daten, wie sie insbesondere für Komponenten eines Fahrzeug-Diebstahlschutzsystems benötigt werden, so soll es Unberechtigten nicht möglich sein, in Kenntnis dieser Daten zu gelangen. Herkömmlicherweise bietet sich daher die Technik der Codierung, d.h. Verschlüsselung, dieser Daten mit einem symmetrischen oder asymmetrischen Codierverfahren an, wie sie in der Kryptografie geläufig sind. Dabei werden die zu übertragenden Daten in der Zentrale codiert und abgesendet. In der jeweiligen Servicestelle werden die gesendeten, codierten Daten empfangen und in einem Endgerät, z.B. einem PC, decodiert und dann mittels eines nachgeschalteten Programmiergerätes in das betreffende Fahrzeugbauteil eingespeist. Dieses Verfahren gewährleistet, daß die Daten während ihrer Übertragung auf der Datenübertragungsstrecke zwischen Zentrale und Servicestelle gegen unbefugte Versuche, Kenntnis von diesen Daten zu erlangen, geschützt sind. Es besteht aber das Problem, daß diese Daten in der Servicestelle selbst zwischen dem decodierenden Endgerät und dem zu programmierenden Fahrzeugteil offen, d.h. im decodierten Zustand, zutage treten. Ein Ausspähen nach solchen geheimen Dateninformationen in diesem Datentransferabschnitt kann daher einen Unberechtigten eventuell in die Lage versetzen, das Diebstahlschutzsystem des Fahrzeugs zu überwinden. Beispielsweise kann ein Abhören entsprechender, sich auf das Diebstahlschutzsystem des Fahrzeugs beziehender Daten während einer Einprogrammierung derselben in einen Ersatzschlüssel dazu benutzt werden, anschließend mit diesen abgehörten Daten unbefugterweise weitere Schlüsselduplikate anzufertigen.

In der Offenlegungsschrift DE 43 34 859 A1 ist eine Einrichtung beschrieben, die sich unter anderem zum Einprogrammieren von Daten in elektronische Steuergeräte von Kraftfahrzeugen eignet, insbesondere zur ausstattungs-/fahrzeugspezifischen Programmierung der Steuergeräte beim Fahrzeughersteller. Dazu enthält diese Einrichtung ein fahrzeugexternes, mobiles Programmiergerät, mit dem die einzuprogrammierenden Daten über eine drahtlose Übertragungsstrecke zu einem kommunikationsfähigen Steuergerät im Fahrzeug übertragen werden können, das die Daten an das anzusprechende Steuergerät weiterleitet.

In der Offenlegungsschrift DE 41 23 666 A1 ist ein Sicherheitssystem für mobile Fahrzeugbauteile beschrieben, das eine zentrale Datenbank beim Hersteller, ein jeweiliges Systemsteuerzentrum bei den Vertragshändlern sowie fahrzeugseitig eine Zentraleinheit und eine oder mehrere, den beteiligten Fahrzeugbauteilen zugeordnete Komponentensteuereinheiten umfaßt. Ein in der zentralen Datenbank abgelegter Werkscode wird herstellerseitig in die beteiligten Fahrzeugbauteile eingegeben und kann während deren Lebensdauer nicht geändert sowie von den Systemsteuerzentren nicht ausgelesen werden. Das jeweilige Systemsteuerzentrum kann Daten in die fahrzeugseitige Zentraleinheit eingeben und von dieser erhaltene Informationen mit denjenigen vergleichen, die sie von der zentralen Datenbank abrufen kann. Die zentrale Datenbank kann Informationen, die sie von dem jeweiligen Systemsteuerzentrum erhält, wie autorisierende Codeänderungen in der fahrzeugseitigen Zentraleinheit oder der jeweiligen Komponentensteuereinheit, korrelieren und damit eine Bestandsführung unterhalten. Bei Auswechslung eines solchermaßen geschützten Fahrzeugbauteils wird dessen individueller Code von der Datenbank in die fahrzeugseitige Zentraleinheit eingegeben.

In der nachveröffentlichten Offenlegungsschrift EP 0 723 896 A2 der prioritätsälteren europäischen Patentanmeldung Nr. 96 100 327.4, zu der die Vertragsstaaten DE, FR, GB und IT benannt sind und die insoweit neuheitsrelevanten Stand der Technik gemäß Artikel 54 (3) und (4) EPÜ bildet, ist ein Verfahren zur Einprogrammierung von Daten in ein jeweiliges Fahrzeugbauteil beschrieben, bei dem in diebstahlrelevante Systemkomponenten eines Diebstahlsicherungssystems motorangetriebener Kraftfahrzeuge vor der erstmaligen Inbetriebnahme der jeweiligen Komponente eine für sie charakteristische Identifikationsnummer und eine von außerhalb der Systemkomponente nicht-auslesbare, individuelle Geheimnummer in einen nichtflüchtigen Datenspeicher der Systemkomponente abgespeichert wird, wobei durch eine externe Zentralstelle die Identifikationsnummern und die zugehörigen Geheimnummern der diebstahlrelevanten Systemkomponenten registriert werden. Während die Identifikationsnummern innerhalb des Diebstahlsicherungssystems sowie zwischen dem Diebstahlsicherungssystem und der Zentralstelle im Klartext übertragen werden, werden die Geheimnummern nicht im Klartext übertragen und dienen als Kommunikationsschlüssel für kryptologische Protokolle bei der Datenübertragung der diebstahlrelevanten Systemkomponenten innerhalb des Diebstahlsicherungssystems und/oder mit der Zentralstelle. Komponenten des Diebstahlsicherungssystems sind insbesondere ein Wegfahrsperren-Steuergerät und vorzugsweise darüber hinaus ein Motorsteuergerät und ein elektronischer Schlüssel. Die Kommunikation zwischen Zentralstelle und Diebstahlsicherungssystem erfolgt nach einem direkten oder einem indirekten Verfahren, jeweils über eine als Vermittlungsstelle dienende Übertragungseinheit, die z.B. beim Kraftfahrzeug-Hersteller am Bandende oder in einer Werkstatt installiert ist und eine zugehörige Steuereinheit umfaßt, über die der Datenaustausch zwischen dem Diebstahlsicherungssystem und der Zentralstelle läuft. Das direkte und das indirekte Verfahren unterscheiden sich danach, ob zur Initialisierung einer jeweiligen Komponente des Diebstahlsicherungssystems die Kommunikation zwischen Systemkomponente und Zentralstelle direkt oder über das die Wegfahrsperrfunktion enthaltende Steuergerät indirekt erfolgt. Zur Anforderung der Initialisierungsdaten wird die Identifikationsnummer des Wegfahrsperren-Steuergerätes und des Motorsteuergerätes an die Zentrale übermittelt, die daraufhin deren Authentifizierung durchführt, wonach gegebenenfalls die Übertragung der in die betreffende Systemkomponente einzuprogrammierenden, von der Zentralstelle gelieferten Daten unter Verwendung eines geeigneten Verschlüsselungsverfahrens erfolgt.

In der Offenlegungsschrift DE 43 42 641 A1 (neuheitsrelevanter Stand der Technik gemäß Art 52 (2) EP ist ein Verfahren zur Authentifikation zwischen einem mobilen Datenträger und einer stationären Datenstation offenbart. Dabei weist der mobile Datenträger einen ersten schützbaren Speicherbereich, in den eine individuelle Zahl gegenüber Überschreiben geschützt gespeichert wird, und einen zweiten, nicht lesbaren und geschützt schreibbaren Speicherbereich auf, in den ein der Authentifikation zugehöriger Geheimcode eingeschrieben wird, während die stationäre Datenstation die individuelle Zufallszahl und den individuellen Geheimcode eines jeden zugehörigen mobilen Datenträgers gespeichert hat. Bei erstmaliger Benutzung eines neuen mobilen Datenträgers, z.B. eines elektronischen Schlüssels, erkennt die Datenstation selbigen durch die im mobilen Datenträger gespeicherte individuelle Zufallszahl als neu, stellt über den Kryptoalgorithmus die Echtheit desselben fest und generiert daraufhin einen neuen Geheimcode und speichert ihn in den nicht lesbaren und geschützt schreibbaren Speicherbereich des mobilen Datenträgers ab. Dazu wird vorab vom Hersteller für jeden mobilen Datenträger der zugehörige Datensatz in die stationäre Datenstation eingespeichert. Des weiteren nimmt derjenige Systemnutzer, bei dem die mobilen Datenträger und die stationäre Datenstation zusammenkommen, z.B. ein Fahrzeughersteller, die Zuordnung der einzelnen mobilen Datenträger zur jeweiligen stationären Datenstation sowie die Initialisierung der mobilen Datenträger vor. Dieser Systemnutzer kann z.B. auch das Einschreiben einer individuellen Identifikationsnummer in einen ungeschützten Speicherbereich des jeweiligen mobilen Datenträgers vornehmen. Demgegenüber erfolgt das Einschreiben der individuellen Zahl in den ersten schützbaren Speicherbereich und des Geheimcodes in den zweiten, nicht lesbaren und geschützt schreibbaren Speicherbereich des mobilen Datenträgers bereits durch dessen Hersteller, z.B. einem Halbleiterhersteller.

Der Erfindung liegt als technisches Problem die Bereitstellung eines Verfahrens und einer Einrichtung der eingangs genannten Art zugrunde, mit denen das Einprogrammieren von Daten in ein Fahrzeugbauteil in verbesserter Weise erfolgen kann und zuverlässig vor unberechtigten Versuchen, in Kenntnis dieser Betriebsdaten zu gelangen, geschützt ist.

Dieses Problem wird zum einen für den benannten Vertragsstaat ES durch ein Verfahren mit den Merkmalen des Anspruchs 1 und eine Einrichtung mit den Merkmalen des Anspruchs 8 oder 9 eines zugehörigen, ersten Anspruchssatzes und zum anderen für die benannten Vertragsstaaten DE, FR, GB und IT durch ein Verfahren mit den Merkmalen des Anspruchs 1 oder 3 sowie eine Einrichtung mit den Merkmalen des Anspruchs 7 oder 8 gemäß eines zugehörigen, zweiten Anspruchssatzes gelöst.

Die Gefahr, daß sich ein Unberechtigter die Kenntnis über die von der Zentrale abgesandten, in das jeweils zu programmierende Fahrzeugbauteil einzuspeisende Dateninformation verschaffen kann, wird dadurch minimiert, daß die Decodierung der zu übertragenden Daten erst in dem mit diesen Daten zu programmierenden Fahrzeugbauteil erfolgt. Das Verfahren und die Einrichtung können insbesondere dazu benutzt werden, Ersatzteile durch Einprogrammierung entsprechender fahrzeugbezogener Daten für ein bestimmtes Fahrzeug betriebsfähig zu machen. Des weiteren können sie zur Durchführung von Sonderfunktionen in Fahrzeugbauteilen benutzt werden, z.B. zum Sperren oder Freigeben elektronischer Schlüssel für ein bestimmtes Fahrzeug. Als weiterer Anwendungsfall kann das Vorbereiten eines Fahrzeugbauteils für den anschließenden Betrieb in einem bestimmten Fahrzeug durch Einprogrammierung entsprechender Daten auch darin bestehen, den anschließenden Betrieb des Bauteils und damit des Fahrzeugs nur in einem begrenzten Umfang freizugeben, z.B. für eine begrenzte Anzahl von Motorstarts, eine begrenzte Laufleistung, eine begrenzte Zeitdauer oder nur innerhalb eines begrenzten geografischen Bereichs. Eine weitere Einsatzmöglichkeit liegt im Bereich der Fahrzeug-Vermietung, bei der unterschiedliche Fahrzeuge an einem oder mehreren unterschiedlichen Standorten den Systemnutzern zur kurz- oder längerfristigen Nutzung zur Verfügung gestellt werden. In den beiden letztgenannten Anwendungen kann es zweckmäßig sein, Datensätze für eine bestimmte Fahrzeuggruppe aus einer übergeordneten Zentrale, die sich z.B. beim Fahrzeughersteller befindet, in eine untergeordnete, lokale Zentrale auszulagern, die sich z.B. bei einer Autovermietstation oder einem Leasingunternehmen befindet.

Gemäß einem speziellen Erfindungsaspekt ist zur Anforderung der Daten bei der Zentrale die Identität des Fahrzeugs und des zu programmierenden Fahrzeugbauteils sowie des anfordernden Systemnutzers zu übermitteln, so daß die Zentrale die Berechtigung der Anforderung überprüfen und die richtigen Daten für das zu programmierende Fahrzeugbauteil codieren und absenden kann. Zudem ist die Zentrale automatisch über die für ein jeweiliges Fahrzeug gerade verwendeten Komponenten informiert.

In einer Weiterbildung der Erfindung erfolgt die Einspeisüng der codierten Daten vom Programmiergerät der jeweiligen Servicestelle direkt in ein zu diesem Zweck an das Programmiergerät angeschlossenes Fahrzeugbauteil.

Gemäß einem weiteren speziellen Erfindungsaspekt ist eine indirekte Einprogrammierung der in der Servicestelle empfangenen, codierten Daten vom Programmiergerät über ein Zwischenspeicherbauteil in das zu programmierende Fahrzeugbauteil realisiert. Hierbei werden die Daten in der Zentrale doppelt codiert und nach Empfang durch die anfordernde Stelle zunächst vom dortigen Programmiergerät in das angeschlossene Zwischenspeicherbauteil eingespeist und dort einmal decodiert und zwischengespeichert. Anschließend wird das Zwischenspeicherbauteil, vorzugsweise unter Abkopplung vom Programmiergerät, über eine entsprechende Anschlußschnittstelle an ein fahrzeugseitiges Datenübertragungssystem, z.B. ein CAN-System oder ein Diagnoseleitungssystem, angekoppelt, wonach die zwischengespeicherten Daten über das fahrzeugseitige Datenübertragungssystem in das zu programmierende Fahrzeugbauteil eingespeist und dort vollends decodiert werden. Diese Vorgehensweise hat den Vorteil, daß für die verschiedenen, zu programmierenden Fahrzeugbauteile nicht jeweils spezielle Adapter zum Anschließen an das Programmiergerät benötigt werden. Dabei kann es sich bei dem Zwischenspeicherbauteil selbst ebenfalls um ein Fahrzeugbauteil handeln, z.B. einen elektronischen Schlüssel, der als Sonderschlüssel zur zusätzlichen Erfüllung der Zwischenspeicherfunktion ausgelegt ist.

In einer vorteilhaften Ausgestaltung eignet sich die Erfindung insbesondere für Fahrzeugvermietungssysteme, bei denen die Möglichkeit bestehen soll, bestimmten Kunden bestimmte Fahrzeuge beispielsweise zeitlich oder räumlich nutzungsbegrenzt zur Verfügung stellen zu können. Durch feste Zuordnung eines Schlüssels für einen jeweiligen Kunden kann dieser gegenüber der vermietenden Zentrale als Identitätsnachweis verwendet werden. Die Zentrale kann dann in kundenspezifischer Weise Daten in den Schlüssel übertragen, die neben der Nutzungsberechtigung für das gewünschte Fahrzeug auch die jeweilige Mobilitätsbegrenzung beinhalten, wodurch der Kunde das zum Schlüssel gehörige Fahrzeug beispielsweise nur für eine vorgegebenen Zeitdauer, eine vorgegebene Entfernung oder eine vorgegebene Anzahl von Motorstarts verwenden kann. Dabei kann sowohl die Übermittlung der Kennzeichnungsnummer an die Zentrale als auch die Übermittlung der Mobilitätsbegrenzungsinformation zurück zum anfordernden Schlüssel oder Zwischenspeicherbauteil codegeschützt erfolgen.

Eine weitere Ausgestaltung der Erfindung bewirkt eine Mobilitätsbegrenzung für ein Fahrzeug dadurch, daß der zugehörige Fahrzeugschlüssel von der Zentrale mit einem Datensatz programmiert wird, der nur eine vorgebbare Anzahl von Nutzungsberechtigungsfreigabeaktionen durch den Schlüssel zuläßt. Mit dieser Maßnahme kann eine vorteilhafte Fahrzeugkurzzeitvermietung mit geringem Unterschlagungsrisiko realisiert werden. Zur Durchführung dieses Verfahrens eignet sich besonders eine Einrichtung, bei welcher die entsprechenden, mobilitätsbegrenzenden Fahrberechtigungsdaten von einer Zentrale, z.B. einer Vermietstation, die über ein Schlüsselverwaltungsmodul zur Verwaltung der elektronischen Schlüssel aller beteiligten Fahrzeuge verfügt, über eine fahrzeugseitige oder eine ortsfeste, z.B. in einem jeweiligen Haltestellenautomat untergebrachte Schlüsselprogrammierungseinheit in den Schlüssel einprogrammiert werden.

Eine weitere Ausgestaltung der Erfindung sieht vor, daß die Anzahl jeweils durchgeführter Nutzungsberechtigungsfreigabeaktionen fahrzeugseitig erfaßt und rechtzeitig vor Erreichen der vorgegebenen Anzahl zugelassener Freigabeaktionen eine Anforderung an die Zentrale zur Übersendung eines weiteren Datensatzes zwecks Einprogrammierung in den Fahrzeugschlüssel übermittelt wird, um die Nutzungsberechtigung für das Fahrzeug durch den Schlüssel lückenlos für einen weiteren Satz von Freigabeaktionen zu ermöglichen. Dabei wird der neue Datensatz von der Zentrale nur dann gesendet, wenn ihr bis dahin keine diesbezügliche Sperrmeldung vorliegt. Mit dieser Maßnahme läßt sich die Gefahr eines Diebstahls des Fahrzeugs gering halten, da ein entwendetes Fahrzeug nur noch für eine begrenzte Anzahl von Fahrzeugstarts bzw. Ansteuerungsvorgängen einer mit dem Schlüssel angesteuerten Türschließanlage verwendbar ist.

Bevorzugte Ausführungsformen der Erfindung sind in den Zeichnungen dargestellt und werden nachfolgend beschrieben. Hierbei zeigen:
- Fig. 1: ein schematisches Blockdiagramm einer Einrichtung zur Einprogrammierung von fahrzeugbezogenen Daten in ein jeweiliges Fahrzeugbauteil mit direkter Dateneinprogrammierung,
- Fig. 2: ein schematisches Blockdiagramm einer Einrichtung zur Einprogrammierung von fahrzeugbezogenen Daten in ein jeweiliges Fahrzeugbauteil mit indirektem Einprogrammierungsvorgang über ein Zwischenspeicherbauteil,
- Fig. 3: ein schematisches Blockdiagramm eines Systems zur Fahrzeugkurzzeitvermietung,
- Fig. 4: ein schematisches Blockdiagramm eines Fahrzeugvermietsystems mit Haltestellenautomaten,
- Fig. 5: ein schematisches Blockdiagramm eines unterschlagungsgeschützten Fahrzeugvermietsystems mit direkter Fahrzeugübergabe und
- Fig. 6: ein schematisches Blockdiagramm eines fremdnutzungsgeschützten Fahrzeugsystems für Privatnutzung.

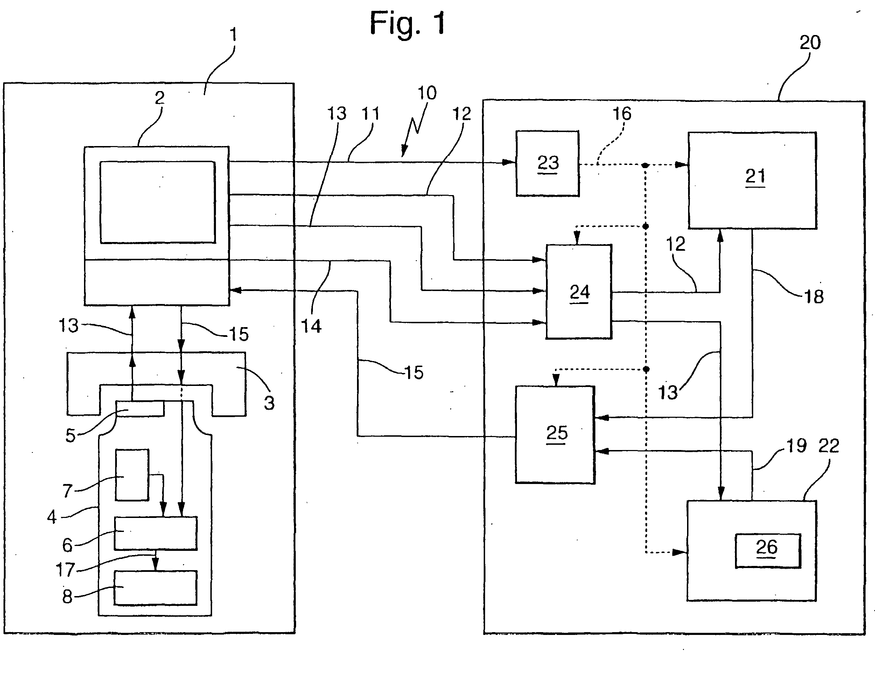

Anhand von Fig. 1 wird nachfolgend ein erstes Verfahren und die zu dessen Durchführung vorgesehene Einrichtung zur Einprogrammierung von fahrzeugbezogenen Daten in ein Fahrzeugbauteil, vorliegend beispielhaft in einen Ersatzschlüssel, beschrieben. Die verfahrensdurchführende Einrichtung ist in Fig. 1 in Blockdiagrammform dargestellt. Eine jeweilige Servicestelle (1), z.B. eine Werkstatt, steht über eine Datenübertragungsstrecke (10), z.B. eine Telefonleitung, mit einer räumlich entfernten Zentrale (20), die sich beispielsweise beim Fahrzeughersteller befindet, in Datenaustauschverbindung. In der Servicestelle (1) soll als Fahrzeugbauteil beispielhaft ein Ersatzschlüssel (4) mit geheimen kryptografischen Daten versorgt werden, damit er für ein ganz bestimmtes Kundenfahrzeug eingesetzt werden kann, das über ein Diebstahlschutzsystem verfügt, bei dem Nutzungsberechtigungsdaten mittels eines entsprechenden kryptografischen Verfahrens codiert, d.h. verschlüsselt, zwischen Schlüsselseite und Fahrzeugseite ausgetauscht werden. Derartige, kryptografisch gesicherte Methoden des Datenaustauschs zwischen Schlüsselseite und Fahrzeugseite zwecks Prüfung der Fahrzeugnutzungsberechtigung sind beispielsweise in den Patentschriften DE 44 11 449 C1, DE 44 11 450 C1 und DE 44 11 451 C1 beschrieben, worauf hier verwiesen werden kann.

Zur Einprogrammierung dieser fahrzeugbezogenen Daten, bei denen es sich vorliegend speziell um Daten handelt, die für das Diebstahlschutzsystem des betreffenden Fahrzeugs relevant sind, wird zunächst eine entsprechende Datenanforderung von der Servicestelle (1) über die Telefonleitung (10) an die Zentrale (20) übermittelt. Dazu werden in der Servicestelle (1) die folgenden vier Dateninformationen in ein dort vorhandenes Endgerät (2), das über einen Bildschirm und eine Tastatur verfügt, eingegeben und über die Telefonleitung (10) an die Zentrale (20) geschickt, wie jeweils durch eine separate, gerichtete Linie (11 bis 14) symbolisiert. Eine erste Dateninformation (11) betrifft die Art der auszuführenden Operation, hier die Information über eine Ersatzschlüsselprogrammierung. Diese Information wird in der Zentrale (20) einem Steuerwerk (23) zugeführt, welche die übrigen, am Verfahren beteiligten Komponenten der Zentrale (20) jeweils in der für die Durchführung der auszuführenden Operation geeigneten Weise ansteuert, wie mit der gestrichelten, gerichteten Linie (16) symbolisiert. Als zweite Dateninformation (12) ist eine Kennzeichnungsnummer für das betreffende Fahrzeug, z.B. eine Fahrzeugidentifikationsnummer, anzugeben. Analog ist als dritte Dateninformation (13) eine Kennzeichnungsnummer für den Ersatzschlüssel (4), z.B. eine Seriennummer desselben, mitzuteilen. Diese ist vorliegend in einem elektronischen Speicher (5) desselben abgelegt, aus dem sie über ein Programmiergerät (3), an welches der Ersatzschlüssel (4) in der Servicestelle (1) während des gesamten Vorgangs angeschlossen ist, in das Endgerät (2) zur Weiterleitung an die Zentrale (20) ausgelesen werden kann. Alternativ ist auch das Anbringen der Kennzeichnungsnummer auf einem Aufkleber des Ersatzschlüssels (4) möglich, von dem sie dann abgelesen und über die Tastatur in das Endgerät (2) eingegeben wird. Schließlich hat der das Endgerät bedienende Bearbeiter eine Berechtigungs- und Identitätsnachweisinformation als vierte Dateninformation (14) an die Zentrale (20) zu übermitteln.

Die drei letztgenannten Dateninformationen (12, 13, 14) für eine Anforderung fahrzeugbezogener Daten für den Ersatzschlüssel (4) werden einer Prüfeinheit (24) der Zentrale (20) zugeführt, welche sie mindestens daraufhin prüft, ob die Anforderung von einer berechtigten Stelle kommt, ob das betreffende Fahrzeug nicht als gestohlen gemeldet ist, ob der mit den fahrzeugbezogenen Daten zu programmierende Ersatzschlüssel (4) nicht als gestohlen gemeldet ist und ob der zu programmierende Ersatzschlüssel (4) rechtmäßig an die vorliegende Servicestelle (1) geliefert worden ist. Wird diese Prüfung in allen vier Punkten bestanden, so wird zum einen die Information (12) über die Fahrzeug-Kennzeichnungsnummer an eine Datenbank (21) für fahrzeugbezogene Daten in der Zentrale (20) weitergegeben. In dieser Datenbank (21) ist für jedes vom Hersteller produzierte Fahrzeug ein Datensatz mit allen Daten gespeichert, die das Diebstahlschutzsystem des Fahrzeugs betreffen. Aus dieser Datenbank (21) können die gewünschten, geheimen Daten (18) für den Ersatzschlüssel (4) ausgelesen werden. Zum anderen wird die Information (13) über die Ersatzschlüssel-Kennzeichnungsnummer an eine Ersatzteil-Datenbank (22) weitergeleitet. In dieser Ersatzteil-Datenbank (22) ist für jedes Fahrzeugbauteil, in das fahrzeugbezogene Daten einprogrammierbar sind, ein individueller, geheimer Codierwert in einem zugehörigen Speicher (26) abgelegt. Korrespondierend dazu wird während der Produktion des jeweiligen Ersatzteils, d.h. hier des Ersatzschlüssels (4), bei Verwendung eines symmetrischen Codierverfahrens derselbe geheime Codierwert bzw. bei Verwendung eines asymmetrischen Codierverfahrens ein zugeordneter geheimer Codierwert im Ersatzteil (4) abgelegt.

Die von der Datenbank (21) für fahrzeugbezogene Daten ausgegebenen Daten werden (18) ebenso wie der von der Ersatzteil-Datenbank (22) ausgegebene, spezielle, nur für den betreffenden Ersatzschlüssel (4) gültige, geheime Codierwert (19) einem Codierer (25) zugeführt. Dieser Codierer (25) codiert die zu übermittelnden, fahrzeugbezogenen Daten mit Hilfe des geheimen Ersatzteil-Codierwertes nach einem herkömmlichen symmetrischen oder asymmetrischen Verschlüsselungsverfahren und überträgt die solchermaßen codierten, fahrzeugbezogen Daten (15) über die Telefonverbindung (10) an die Servicestelle (1). Dort gelangen die codierten, fahrzeugbezogenen Daten (15) vom Endgerät (2) über eine geeignete Schnittstelle in das Programmiergerät (3), in das der zu programmierende Ersatzschlüssel (4) eingelegt ist. Im Programmiergerät (3) werden jedoch lediglich Datenprotokollanpassungen vorgenommen und die Daten gegebenenfalls auf ein anderes Medium zur Weiterleitung umgesetzt, also beispielsweise von elektrischen Signalen auf Infrarotsignale.

Auf diese Weise kann der Ersatzschlüssel (4) vorteilhaft über dieselben Sende-/Empfangskanäle programmiert werden, über die er im späteren aktiven Betrieb mit den fahrzeugseitigen Einrichtungen, beispielsweise einem Zündschloß mit elektronischen Funktionen, kommuniziert. Diese Ersatzschlüssel-Zündschloß-Datenkommunikation umfaßt insbesondere den für das Diebstahlschutzsystem erforderlichen Datenaustausch zur Prüfung der Berechtigung des Ersatzschlüssels für das betreffende Fahrzeug. Folglich ist nicht unbedingt eine eigenständige Schnittstelle für die Einprogrammierung der fahrzeugbezogenen Daten in den Ersatzschlüssel (4) erforderlich. Zudem kann das Programmiergerät (3) in diesem Fall sehr einfach ausgeführt sein, indem es lediglich dieselbe Schnittstelle aufweisen muß wie die im aktiven Betrieb mit dem Ersatzschlüssel (4) kommunizierende Einheit, also beispielsweise das Zündschloß. Wie bereits angedeutet, findet im Programmiergerät (3) selbst keine Decodierung der codierten, fahrzeugbezogenen Daten statt. Vielmehr werden diese Daten erst im Ersatzschlüssel (4) selbst, vorzugsweise innerhalb eines Microprozessors desselben, mittels eines Decodierers (6) unter Zuhilfenahme des in einem zugehörigen Speicher (7) im Ersatzschlüssel (4) abgelegten, geheimen Codierwerts decodiert und als decodierte Daten (17) in einem Datenspeicher (8) abgelegt. Danach liegen die fahrzeugbezogenen Daten im Ersatzschlüssel (4) in nutzbarer, uncodierter Form vor, was den Ersatzschlüssel (4) nunmehr für das betreffende Fahrzeug voll funktionsfähig macht, insbesondere auch hinsichtlich seiner Funktion innerhalb des Diebstahlschutzsystems des Fahrzeugs.

Ein besonderer Vorteil des beschriebenen Verfahrens zur Einprogrammierung der fahrzeugbezogenen Daten in den Ersatzschlüssel (4) besteht darin, daß die Daten an keiner Stelle außerhalb der Zentrale (20) offen, d.h. in decodierter Form, zutage treten. Vielmehr sind die fahrzeugbezogenen Daten auf dem gesamten Übermittlungsweg zwischen Zentrale (20) und Ersatzschlüssel (4) mit dem geheimen, individuellen Ersatzteil-Codierwert codiert. Dies schützt sehr zuverlässig vor unberechtigten Versuchen, in Kenntnis dieser fahrzeugbezogenen Daten zur unbefugten Programmierung anderer Ersatzschlüssel zu gelangen. Die unbefugte Anfertigung solcher Schlüsselduplikate bzw. von Duplikaten anderer Fahrzeugbauteile wird weiter dadurch verhindert, daß der von der Zentrale (20) abgeschickte Satz fahrzeugbezogener Daten aufgrund der Verwendung des individuellen Ersatzteil-Codierwertes nur für das eine, in der Anforderung an die Zentrale (20) angegebene Fahrzeugbauteil (4) zur erfolgreichen Einprogrammierung benutzt werden kann.

Das obige Verfahren eignet sich problemlos für solche zu programmierenden Fahrzeugbauteile, die, wie der Ersatzschlüssel (4), direkt in das Programmiergerät (3) eingelegt oder an dieses angeschlossen werden können und über ihre vorhandenen Schnittstellen mit diesem kommunizieren. Da diese Schnittstellen für die verschiedenen programmierbaren Fahrzeugbauteile angepaßt an deren jeweilige Bedürfnisse unterschiedlich ausgelegt sind, wird bei dieser Vorgehensweise im allgemeinen für jedes Bauteil bzw. Ersatzteil ein spezieller Adapter für das Programmiergerät benötigt.

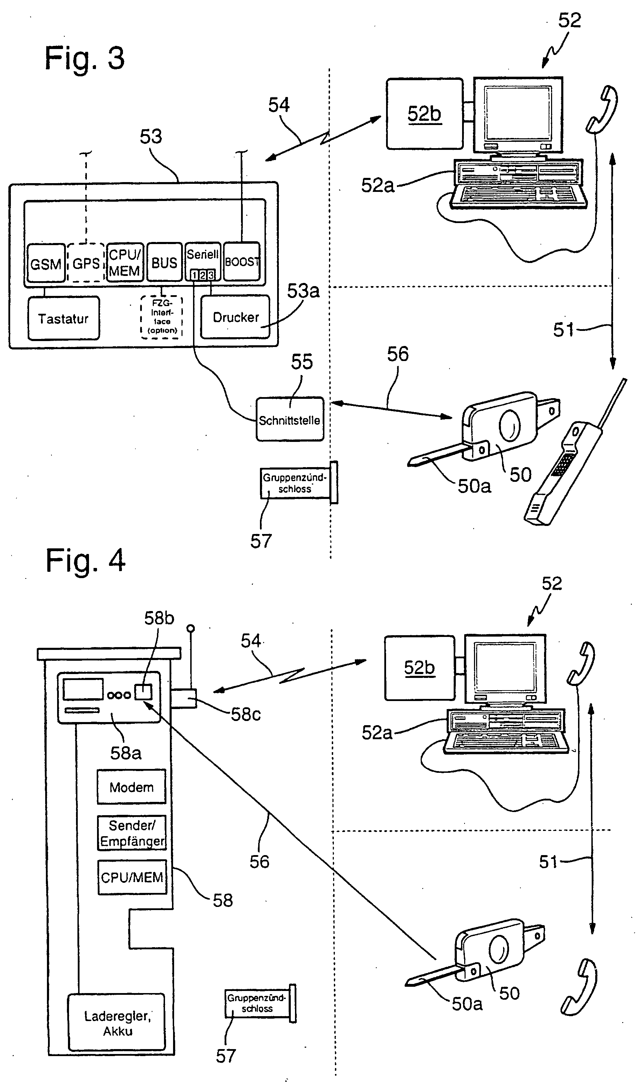

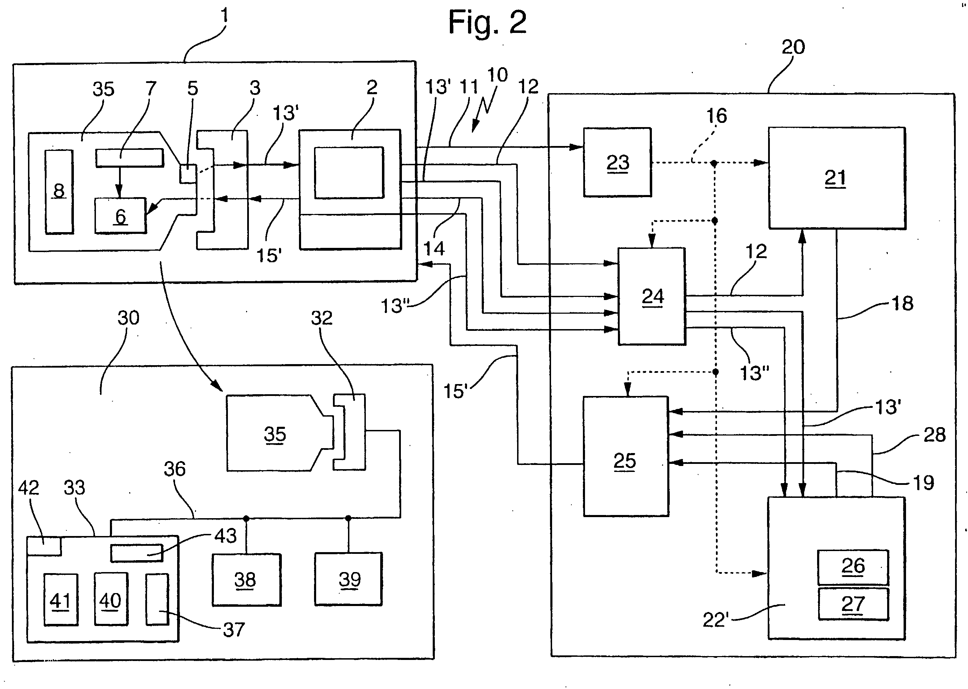

Bei einer Vorgehensweise, wie sie mit der in Fig. 2 gezeigten Einrichtung möglich ist, ist die Bereitstellung einer solchen Mehrzahl spezieller Adapter nicht erforderlich. Bei dieser nachfolgend erläuterten Einrichtung, bei der für funktionell gleiche Elemente wie für die Einrichtung von Fig. 1 gleiche Bezugszeichen gewählt sind, dient nur eine ausgewählte Komponente (35) für die direkte Programmierung am Programmiergerät (3), so daß das Programmiergerät (3) nur mit einer einzigen, passenden Schnittstelle für diese Komponente (35) auszustatten ist. Nur diese eine Komponente (35) nimmt dann bei diesem Verfahren einer indirekten Fahrzeugbauteilprogrammierung die von der Zentrale (20) übertragenen, codierten, fahrzeugbezogenen Daten auf und gibt sie danach in einem davon unabhängigen, getrennten Vorgang an ein tatsächlich zu programmierendes Fahrzeugbauteil (33) weiter. Die zum Anschließen an das Programmiergerät (3) bestimmte Komponente (35) ist so ausgewählt, daß sie in einfacher Weise mit allen gegebenenfalls zu programmierenden Fahrzeugbauteilen in Datenübertragungsverbindung gebracht werden kann.

Die Komponente (35) kann dabei ein spezielles, im Fahrzeug an sich nicht vorkommendes Bauteil sein, das so gebaut ist, daß es in jedem Fahrzeug leicht an ein vorhandenes Datenbussystem oder eine Diagnoseleitung angeschlossen werden kann, um die Dateninformation, die sie vom Programmiergerät (3) aufgenommen hat, an das eigentlich zu programmierende Fahrzeugbauteil (33) abzugeben, das an dieses Bussystem bzw. an diese Diagnoseleitung angeschlossen ist. Alternativ wird bevorzugt für diese als Zwischenspeicherbauteil zur Zwischenspeicherung der codierten, fahrzeugbezogenen Daten fungierende Komponente (35) ein ohnehin für die Fahrzeuge bestimmtes Bauteil gewählt. Speziell dient im Beispiel der Fig. 2 ein für das Fahrzeug passender elektronischer Ersatzschlüssel (35) als dieses Zwischenspeicherbauteil. Für den Programmiervorgang ist dann der Fall, daß der als Zwischenspeicherbauteil fungierende Ersatzschlüssel (35) selbst programmiert werden soll, von demjenigen, daß ein anderes Fahrzeugbauteil programmiert werden soll, zu unterscheiden. Im ersten Fall wird genau wie oben bezüglich der Einrichtung von Fig. 1 beschrieben vorgegangen. Der Ersatzschlüssel (35) ist dabei als das zu programmierende Ersatzteil direkt an das Programmiergerät (3) innerhalb der Servicestelle (1) angeschlossen. Im anderen Fall der Programmierung eines anderen Fahrzeugbauteils (33), welches für den weiteren Betrieb mit dem Fahrzeug geheime kryptografische Daten erhalten soll, fungiert der ausgewählte Ersatzschlüssel (35) lediglich als Zwischenspeicherbauteil, d.h. als Datenträger, wobei ihm die fahrzeugbezogenen Daten vom Programmiergerät (3) zugeführt werden und es diese in einem nachfolgenden Vorgang an das eigentlich zu programmierende Fahrzeugbauteil (33), das sich in dem betreffenden Fahrzeug (30) befindet, abgibt. Aufgrund dieser Zusatzfunktion wird der ausgewählte Ersatzschlüssel (35) nachfolgend als Sonderschlüssel bezeichnet.

Anhand von Fig. 2 wird nachfolgend die Vorgehensweise für diese indirekte Programmierung eines Ersatzteils (33) des Diebstahlschutzsystems in dem betreffenden Fahrzeug (30) unter Verwendung des Sonderschlüssels (35) näher erläutert. Der Sonderschlüssel (35) ist vorzugsweise baugleich mit dem Ersatzschlüssel (4) gemäß Fig. 1. Als Informationen für eine Anforderung fahrzeugbezogener Daten werden der Zentrale (20) über die Telefonverbindung (10) wiederum eine Information über die Art der auszuführenden Operation (11), hier z.B. über eine Ersatzteilprogrammierung, eine Information (12) über die Fahrzeug-Kennzeichnungsnummer, eine Informaticn (13") über die Kennzeichnungsnummer, z.B. die Seriennummer, des zu programmierenden Ersatzteils (33), die vorzugsweise durch Ablesen von einem am Ersatzteil (33) angebrachten Aufkleber (42) und Eingeben in das Endgerät (2) an der Servicestelle (1) dem System bekannt gemacht wird, eine Information (14) als Berechtigungs- und Identitätsnachweis des Bearbeiters, z.B. in Form eines Paßwortes oder einer Nutzeridentitätsnummer, sowie zusätzlich eine Information (13') über die Kennzeichnungsnummer, z.B. die Seriennummer, des Sonderschlüssels (35) übermittelt. Die letztgenannte Information (13') wird vorliegend elektronisch aus dem diesbezüglichen Sonderschlüsselspeicher (5) ausgelesen. Alternativ kann auch hier das Ablesen von einem aufgebrachten Aufkleber und Eingeben in das Endgerät (2) vorgesehen sein.

Die erstgenannte Information (11) wird wiederum dem Steuerwerk (23) der Zentrale (20) zugeführt, das die übrigen beteiligten Komponenten in der Zentrale (20) geeignet ansteuert, wie gestrichelt (16) symbolisiert. Die vier letztgenannten Informationen (12, 13', 13", 14) werden der Prüfeinheit (24) zur Überprüfung der Berechtigung der Datenanforderung zugeführt. Bei erfolgreicher Prüfung leitet die Prüfeinheit (24) die Fahrzeug-Kennzeichnungsnummer (12) der Datenbank (21) mit den fahrzeugbezogenen Daten und die Kennzeichnungsnummer (13") des zu programmierenden Ersatzteils (33) sowie diejenige (13') des Sonderschlüssels (35) an eine gegenüber der Einrichtung von Fig. 1 modifizierte Ersatzteil-Datenbank (22') weiter, die neben dem Speicher (26) für fahrzeugbauteilindividuelle, geheime Codierwerte eine zusätzliche Speicherstelle (27) für einen zwischenspeicherbauteilindividuellen Codierwert, d.h. hier einen Sonderschlüssel-Codierwert beinhaltet. Je nach Verwendung eines symmetrischen oder asymmetrischen Codierverfahrens sind jeweils die gleichen oder zugeordnete Codierwerte in einem Codierwertspeicher (37) des zu programmierenden Ersatzteils (33) bzw. im Codierwertspeicher (7) des Sonderschlüssels (35) durch Einspeicherung während der Produktion des Ersatzteils (33) bzw. des Sonderschlüssels (35) abgelegt.

Die Datenbank (21) für die fahrzeugbezogenen, geheimen Daten liefert letztere (18) für das zu programmierende Ersatzteil (33) und führt sie dem Codierer (25) zu. Letzterem sind außerdem der betreffende ersatzteilindividuelle Codierwert (19) und der sonderschlüsselindividuelle Codierwert (28) aus der Ersatzteil-Datenbank (22') zugeführt. Der Codierer (25) codiert zunächst die fahrzeugspezifischen Daten (18) unter Zuhilfenahme des nur für das zu programmierende Ersatzteil (33) gültigen, geheimen, ersatzteilindividuellen Codierwertes (19). Danach werden diese einmal codierten Daten erneut vom Codierer (25) nunmehr unter Zuhilfenahme des nur für den ausgewählten Sonderschlüssel (35) gültigen, geheimen, sonderschlüsselindividuellen Codierwertes codiert und dann als doppelt codierte Daten (15') über die Telefonverbindung (10) an die Servicestelle (1) übertragen. Dort gelangen die Daten (15') zunächst über das Programmiergerät (3) in den Sonderschlüssel (35), der in das Programmiergerät (3) eingelegt ist. Anhand des übertragenen Dateninhalts erkennt der Sonderschlüssel (35), daß er nicht als Ersatzschlüssel programmiert werden soll, sondern lediglich als Zwischenspeicherbauteil bzw. Datentransportmedium zu dem im Fahrzeug (30) eingebauten Ersatzteil (33) dienen soll.

Die doppelt codierten, fahrzeugbezogenen Daten (15') werden daraufhin im Decodierer (6) innerhalb des Sonderschlüssels (5) mit Hilfe des geheimen Sonderschlüssel-Codierwertes einmal decodiert und danach als noch einfach mit dem geheimen, ersatzteilindividuellen Codierwert codierte, fahrzeugbezogene Daten im Speicher (8) zwischengespeichert. Da diese Daten noch immer codiert sind, bleiben sie weiterhin vor unbefugten Versuchen der Kenntnisnahme geschützt. Anschließend wird der Sonderschlüssel (35) zum Fahrzeug (30) gebracht und in ein Schlüssel-Schnittstellengerät (32) desselben eingesteckt. Dieses Schlüssel-Schnittstellengerät (32) kann beispielsweise ein elektronischer Zündstartschalter des Fahrzeugs (30) sein, über den im Normalbetrieb die diebstahlschutzrelevante Datenkommunikation zwischen Schlüssel und Fahrzeug abläuft.

Ein wirksamer Diebstahlschutz wird besonders dadurch erreicht, daß möglichst viele betriebsrelevante Fahrzeugkomponenten so in die Diebstahlabsicherung einbezogen sind, daß die vom Schlüssel abgegebenen, codierten Authentikationsdaten in jeder der Komponenten decodiert und verifiziert werden und sich bei erfolgreicher Authentikation jede Komponente selbst ihre Betriebsfreigabe erteilt. Alle diese Komponenten, die geheime kryptografische Daten zum Zweck des Diebstahlschutzes enthalten, sind daher an ein Kommunikationsnetz, vorzugsweise ein Datenbussystem, angeschlossen. In Fig. 2 ist hierfür beispielhaft ein Datenbussystem (36) gezeigt, an das neben dem Schlüssel-Schnittstellengerät (32) und das beispielhaft zu programmierende Ersatzteil (33) weitere, mit diebstahlschutzrelevanten Daten programmierbare Fahrzeugbauteile (38, 39) angeschlossen sind. Aus dem in das Schnittstellengerät (32) eingesteckten Sonderschlüssel (35) gelangen nun die noch einfach codierten Daten über dieses Fahrzeug-Datenbussystem (36) in die betreffende Zielkomponente, hier das zuvor angegebene Ersatzteil (33). Erst in diesem jeweiligen Ersatzteil (33) werden die noch einfach codierten Daten, vorzugsweise innerhalb eines Ersatzteil-Microprozessors, in einem Decodierer (40) mit Hilfe des im Codierwertspeicher (37) des Ersatzteils (33) abgelegten, geheimen Codierwertes decodiert, wodurch das Ersatzteil (33) innerhalb des Diebstahlschutzsystems des Fahrzeugs (30) funktionsfähig wird. Die uncodierten, fahrzeugbezogenen Daten werden vom Decodierer (40) in einem Datenspeicher (41) im Ersatzteil (33) abgelegt.

Auch bei diesem erfindungsgemäßen Beispiel einer indirekten Programmierung eines Ersatzeils (33) mit den erforderlichen, fahrzeugbezogenen Daten liegt ein wesentlicher Vorteil darin, daß diese Daten an keiner Stelle auf dem Übertragungsweg zwischen Zentrale (20) und Ersatzteil (33) uncodiert zutage treten. Da außerdem an das Programmiergerät (3) immer ein gleichartiges Bauteil, im speziellen Fall ein Sonderschlüssel (35), angeschlossen wird, genügt für das Programmiergerät (3) eine einzige Schnittstelle, ohne daß verschiedene Schnittstellenadapter erforderlich sind. Als weiterer Vorteil kann ein ohnehin vorhandenes Ersatzteil, vorliegend ein Ersatzschlüssel (35) mit zusätzlicher Zwischenspeicherfunktion, zum Datentransport vom Programmiergerät (3) zum Fahrzeug (30) benutzt werden.

Die anhand der Fig. 1 und 2 beschriebene Übertragung fahrzeugbezogener Daten von der Zentrale in ein Fahrzeugbauteil kann nicht nur dazu benutzt werden, wie beschrieben diebstahlschutzrelevante Dateninformationen in das Ersatzteil einzubringen, sondern auch um Sonderfunktionen in Fahrzeugbauteilen auszuführen, wie sie nachfolgend beispielhaft für die Einrichtung von Fig. 2 erläutert werden.

Eine solche Sonderfunktion betrifft beispielsweise das Sperren oder Entsperren von Fahrzeugschlüsseln. In einem sicheren Fahrzeugschutzsystem sollten die zu einem Fahrzeug gehörigen Schlüssel datenmäßig unterscheidbar sein, d.h. jeder Schlüssel trägt neben einer fahrzeugspezifischen Nummer auch eine eigene, schlüsselspezifische Schlüsselnummer und beinhaltet einen speziellen, geheimen, kryptografischen Codierwert, der die Codierung der Authentikationsdaten bewirkt. In jeder einzelnen diebstahlschutzrelevanten Fahrzeugkomponente (32, 33, 38, 39) ist nun im Beispiel von Fig. 2 ein Register (43) untergebracht, das anzeigt, welche Schlüssel gesperrt sind. Da die Änderung dieser Daten sicherheitskritisch ist, sind Maßnahmen gegen diesbezügliche Manipulationen getroffen. Um ein sicheres Vorgehen zu gewährleisten, ist dafür gesorgt, daß solche Datenänderungsbefehle nur über die Zentrale (20) abgewickelt werden können. Dazu wird wiederum ein herkömmliches kyptografisches Verfahren angewendet, mit dem ein von der Zentrale (20) abgegebener Befehl, beispielsweise zur Sperrung eines bestimmten Schlüssels für ein bestimmtes Fahrzeug, unverfälscht zu den beteiligten Fahrzeugkomponenten (32, 33, 38, 39) übertragen wird. Hierfür geeignete, die Authentizität der Nachricht sicherstellende Verschlüsselungsverfahren sind in den oben genannten Patentschriften DE 44 11 449 C1, DE 44 11 450 C1 und DE 44 11 451 C1 beschrieben. Die Übertragung dieser kryptologisch gesicherten Befehle kann nun mit der Einrichtung gemäß Fig. 2 vorteilhaft von der Zentrale (20) über die Datenübertragungsstrecke in den Sonderschlüssel (35) und von dort in eine oder mehrere der beteiligten Fahrzeugkomponenten (32, 33, 38, 39) erfolgen. Selbstverständlich können auf diese Weise außer den Befehlen zur Sperrung oder Entsperrung von Schlüsseln auch andere Befehle gesichert von der Zentrale (20) zum Fahrzeug (30) übertragen und dort ausgeführt werden.

Eine weitere Verwendungsmöglichkeit der Einrichtung von Fig. 2 betrifft Zustandsabfragemöglichkeiten über die Zentrale (20). Dieser Anwendung liegt die Tatsache zugrunde, daß alle relevanten Befehle von der Zentrale (20) ausgehen, d.h. eine jeweilige Servicestelle (1) ist nur dann in der Lage, einen Ersatzschlüssel zu programmieren, ein diebstahlschutzrelevantes Ersatzteil zu programmieren oder einen Schlüssel zu sperren oder zu entsperren, wenn jeweils dementsprechende Daten bei der Zentrale (20) angefordert wurden. Die Zentrale (20) ist daher über den Status der Diebstahlschutzanlage jedes Fahrzeugs (30) vollständig informiert. Bei Bedarf kann auch vorgesehen sein, daß die Zentrale (20) eine Quittierung bestimmter Operationen, wie das Sperren von Schlüsseln, fordert, was durch Übertragung codierter Daten vom Fahrzeug (30) zur Zentrale (20) unter Umkehrung der beschriebenen Übertragungsrichtung für die fahrzeugbezogenen Daten erfolgen kann, und zwar wiederum unter Einsatz herkömmlicher kryptologischer Verfahren, z.B. symmetrischer Codierverfahren. Als Transportmedium zwischen den fahrzeugseitigen Komponenten (32, 33, 38, 39) und dem Endgerät (2) in der Servicestelle (1) wird wiederum der Sonderschlüssel (35) eingesetzt. Das Übertragen der Quittierungsnachricht aus dem Sonderschlüssel (35) an die Zentrale (20) kann dabei entweder nach dem Einbau eines jeweiligen Ersatzteils (33, 38, 39) durch nochmaliges Einlegen des Sonderschlüssels (35) in das Programmiergerät (3) oder dadurch erfolgen, daß die Quittierungsnachricht aus dem Sonderschlüssel (35) automatisch vor Durchführung einer nächsten Sonderfunktion ausgelesen wird. Da somit, wie gesagt, die Zentrale (20) stets über den aktuellen, diebstahlschutzrelevanten Zustand aller Fahrzeuge informiert ist, kann sie jederzeit darüber Auskunft geben, welche Schlüssel für ein bestimmtes Fahrzeug derzeit gültig sind. Dies macht es beispielsweise Fahrzeugversicherern möglich, entsprechende Informationen nach einem Fahrzeugdiebstahl abzufragen, um beurteilen zu können, ob tatsächlich alle gültigen Schlüssel seitens des Versicherungsnehmers vorgelegt werden konnten.

Die in den Fig. 1 und 2 dargestellten Einrichtungen und mit diesen durchführbaren Verfahren zur codierten Datenübertragung von einer Zentrale (20) auf einen Schlüssel (4) oder mittels eines als Zwischenspeicherbauteil fungierenden Ersatzschlüssels (35) auf fahrzeugseitige Komponenten (33) können so beschaffen sein, daß eine codierte Datenübertragung in beiden Richtungen möglich ist. Damit können bei Bedarf auch geheimzuhaltende Daten aus einem Schlüssel (4) oder unter Verwendung eines als Zwischenspeicherbauteil fungierenden Ersatzschlüssels (35) aus einer der beteiligten Fahrzeugkomponenten (32, 33, 38, 39) codiert und somit gesichert an die Zentrale (20) zurückübertragen werden. Diese Möglichkeit kann, wie schon erwähnt, z.B. zur Rückmeldung eines Quittiersignals verwendet werden. Möglich ist damit aber auch die Übertragung sonstiger geheimer oder nicht geheimer Daten vom Schlüssel (4) oder von Fahrzeugkomponenten (32, 33, 38, 39) zur Zentrale (20), wie z.B. den aktuellen Zustand des Diebstahlschutzsystems oder der aktuellen Laufstrecke (km-Stand).

Eine weitere Anwendungsmöglichkeit des erfindungsgemäßen Verfahrens und der erfindungsgemäßen Einrichtung besteht im Bereich der Fahrzeug-Vermietung mit der Anforderung, bestimmten Kunden für bestimmte Fahrzeuge eine begrenzte Nutzungsberechtigung einräumen zu können. Dabei kann die Eigenschaft, daß der Schlüssel (4 bzw. 35) eine Kennzeichnungsnummer (13, 13') beinhaltet und diese als Identitätsnachweis an die Zentrale (20) abgibt, als Identitätsnachweis für den Kunden verwendet werden, indem man jedem Kunden einen Schlüssel fest zuordnet. Diesem Kunden können dann mittels der in Fig. 1 und 2 gezeigten Einrichtungen und mit der beschriebenen Vorgehensweise auf gesichertem Weg Nutzungsberechtigungsdaten für jeweils ein bestimmtes, vom Kunden gewünschtes Fahrzeua von der Zentrale (20) in seinen Schlüssel (4) übertragen werden. Dabei kann es sich um Nutzungsberechtigungsdaten handeln, die dem Kunden nur eine begrenzte Mobilität mit dem gewünschten Fahrzeug einräumen. Diese Mobilitätsbegrenzung kann beispielsweise dadurch realisiert werden, daß die von der Zentrale (20) übertragenen Nutzungsberechtigungsdaten so gewählt sind, daß der Schlüssel (4) nur für eine bestimmte Anzahl von Betätigungen, z.B. Motorstarts, das Diebstahlschutzsystem des Fahrzeugs entriegeln bzw. freischalten kann. Des weiteren ist es denkbar, die in Fig. 1 und 2 gezeigten fahrzeugseitigen Einrichtungen auf herkömmliche Art so zu erweitern, daß damit z.B. eine zeitliche, eine geografische oder eine entfernungsmäßige Begrenzung der Mobilität möglich ist. Die hierzu erforderlichen, individuell von der Zentrale (20) vorgebbaren Grenzwerte werden ebenfalls mit der zu Fig. 2 beschriebenen Vorgehensweise auf gesichertem Weg in den Schlüssel (35) und bei dessen erster Betätigung im Fahrzeug (30) auf die fahrzeugseitigen Komponenten (32, 33, 38, 39) übertragen.

Bei der letztgenannten Anwendung erfolgen zwangsläufig sehr häufig Datenkommunikationen mit der Zentrale (20). Bei Bedarf kann folglich vorgesehen werden, Datensätze für bestimmte Fahrzeuggruppen aus der eigentlichen Zentrale (20), die sich vorteilhafterweise beim Fahrzeughersteller befindet, in eine lokale Zentrale auszulagern, die sich bei einer Autovermietstation oder einem Leasingunternehmen befindet. Datensätze für Fahrzeuge, die von diesen Stellen zu einem späteren Zeitpunkt weiterverkauft werden, können dann wieder in die eigentliche Zentrale (20) zurückverlagert werden.

In den Fig. 3 bis 6 sind verschiedene Systeme beschrieben, bei denen eine Mobilitätsbegrenzung für ein Fahrzeug dadurch vorgesehen ist, daß die Datensätze, die von einer jeweiligen Zentrale in einen Fahrzeugschlüssel entsprechend einer der oben beschriebenen Vorgehensweisen hoch manipulationsgeschützt einprogrammiert werden, nur jeweils eine begrenzte, vorgebbare Anzahl von Nutzungsberechtigungsfreigabeaktionen durch den Fahrzeugschlüssel, d.h. Betätigungen zur Bedienung einer Zentralverriegelungsanlage und/oder einer elektronischen Wegfahrsperreinrichtung, zulassen. Dazu wird diesen Systemen ein Nutzungsberechtigungsfreigabeverfahren zugrundegelegt, bei welchem eine jeweilige Nutzungsberechtigung durch einen Nutzungsberechtigungscode freigegeben wird, wobei für jede Freigabeaktion ein neuer Code verwendet wird, der einerseits im betreffenden Fahrzeugschlüssel und synchron dazu im angesteuerten Fahrzeugsteuergerät zu hinterlegen oder zu generieren ist. Die Mobilitätsbegrenzung wird nun dadurch realisiert, daß die Zentrale als Teil der in den jeweiligen Fahrzeugschlüssel einzuprogrammierenden Daten nur eine vorgegebene Anzahl aufeinanderfolgender Nutzungsberechtigungscodes bzw. eine Information zur Berechnung nur dieser begrenzten Anzahl von Nutzungsberechtigungscodes übermittelt. Damit ist das Fahrzeug mit diesem Schlüssel nur begrenzt, z.B. für eine bestimmte Nutzungsdauer, betreibbar, sofern keine Auffrischung des Schlüssels mit einem neuen Satz von Nutzungsberechtigungscodes erfolgt. Auf der Grundlage dieser Eigenschaften lassen sich die nachfolgend beschriebenen Fahrzeugsysteme realisieren, wie Fahrzeugvermietsysteme mit hohem Unterschlagungsschutz oder Privatfahrzeuge mit hohem Fremdnutzungsschutz.

Fig. 3 zeigt ein vorteilhaftes System zur Fahrzeugkurzzeitvermietung. Bei diesem System schließt der Kunde in einem einmaligen Verwaltungsvorgang einen Nutzungvertrag mit dem Vermieter und erhält eine persönliche Kundennummer und einen elektronischen Fahrzeugschlüssel (50) ausgehändigt. Zu einem gewünschten Zeitpunkt kann dann der Kunde über eine Telefonverbindung (51) bei einer Dispositionszentrale (52) des Vermieters ein Mietfahrzeug anfordern, das sich zum gewünschten Zeitpunkt an einem gewünschten Ort in seiner unmittelbaren Nähe befindet. Ein Dispositionsrechner (52a) übermittelt dann die Fahrzeugkennung und eine gewünschte Anzahl von Nutzungsberechtigungscodes an ein angeschlossenes Schlüsselverwaltungsmodul (52b), in welchem die Nutzungsberechtigungscodes der Fahrzeugflotte des Autovermieters hinterlegt sind. Das Schlüsselverwaltungsmodul (52b) ist als zugangssichere Einheit, z.B. als Krypto-Box in Form einer RechnerSteckkarte bzw. eines PCMCIA-Moduls, ausgeführt und enthält direkt die Nutzungsberechtigungscodes oder einen Berechnungsalgorithmus hierfür für alle elektronischen Schlüssel jedes der Fahrzeuge der Vermietflotte. Es reserviert nun aus dieser Codemenge die gewünschte, begrenzte Anzahl von Nutzungsberechtigungscodes für die betreffende Kundenanforderung und übergibt diese dem Dispositionsrechner (52a). Dieser übermittelt rechtzeitig vor dem für die Fahrzeugübernahme geplanten Zeitpunkt die Kundennummer und die begrenzte Anzahl der Nutzungsberechtigungscodes sowie gegebenenfalls weitere Auftragsdaten, wie z.B. die Reservierungsdauer, an ein nachrüstbares Telematikmodul (53). Die Datenübertragung erfolgt auf eine der zu den Fig. 1 und 2 oben beschriebenen Weisen manipulationsgeschützt über eine zugehörige, drahtlose Datenübertragungsstrecke (54). Das Telematikmodul (53) fungiert dabei als Servicestelle mit Programmiergerät im Sinne der Einrichtung der Fig. 1 und 2, wobei es weitere, in Fig. 3 gezeigte Funktionalitäten umfaßt, auf die hier nicht näher eingegangen zu werden braucht.

Der Kunde sucht dann im vereinbarten Zeitraum den ihm bekannten Fahrzeugort auf und bringt seinen bislang noch nicht fahrberechtigenden Schlüssel (50) an eine mit dem Telematikmodul (53) verbundene Schnittstelle (55) zur Übertragung von Daten zwischen dem Schlüssel (50) und dem Telematikmodul (53) über eine drahtlose Übertragungsstecke (56), z.B. eine Infrarot-, Funk- oder Induktiv-Übertragungsstrecke. Die Schnittstelle (55) kann beispielsweise eine an einem zugehörigen Fenster angeordnete Infrarot-Schnittstelle sein. Der Fahrzeugschlüssel (50) identifiziert sich während dieser Datenübertragung durch Übergabe der Kundennummer gegenüber dem Telematikmodul (53) und wird dann von diesem in dessen Funktion als Schlüsselprogrammiereinheit mit dem von der Zentrale (52) empfangenen Datensatz geladen. Zeitgleich kann es über einen Drucker (53a) ein Mietvertragsexemplar mit Kundendaten, Angaben zur Nutzungsdauer und Fahrzeugdaten ausgeben. Der Kunde kann anschließend für die Zeit der Nutzung den Fahrzeugschlüssel (50) in üblicher Weise verwenden. Zum Starten des Fahrzeugmotors beinhaltet der Schlüssel (50) einen mechanischen Schlüsselteil (50a), der in ein Gruppenzündschloß (57) eingesteckt werden kann, über das alle Fahrzeuge der Vermietflotte verfügen.

Um der Zentrale (52) das Ende einer Fahrzeugnutzung bekanntzugeben, bringt der Kunde nach Rückkehr zu einer Haltestelle und nach Abschließen des Fahrzeugs seinen Schlüssel (50) wiederum an die Schnittstelle (55). Dies wird vom Telematikmodul (53) erkannt, das daraufhin den ersten nicht benutzten Nutzungsberechtigungscode aus dem Schlüssel (50) liest und der Dispositionszentrale (52) zwecks Speicherung übermittelt. Dieser Codewert kann dann als erster Codewert für einen nachfolgenden Kunden verwendet werden. Des weiteren wird zur Entwertung des benutzten Schlüssels (50) ein Löschsignal an diesen übermittelt. Nach Prüfung des Codespeicherzustands im Schlüssel (50) wird dem Kunden durch eine optische Anzeige am Telematikmodul (53) der ordnungsgemäße Abschluß des Vermietvorgangs zwecks Rechnungsstellung und Anschlußdisposition signalisiert. Der Kundenschlüssel (50) ist jetzt sowohl für das zuletzt genutzte als auch für alle übrigen Fahrzeuge unbrauchbar.

Wenn der Schlüssel vor Abschluß eines Vermietvorgangs verloren geht, ist die Zentrale (52) in der Lage, durch Vergabe einer neuen Nutzungsberechtigungscode-Stützstelle an einen Schlüssel ihres Wartungsdienstes das Fahrzeug abzuholen und den verlorenen Schlüssel unbrauchbar zu machen. Falls das Fahrzeug über ein Ortungssystem verfügt, wie einen in Fig. 3 gestrichelt angedeuteten GPS-Empfänger im dortigen Telematikmodul (53), so können die Fahrzeugpositionsdaten jeweils von diesem Ortungssystem an die Zentrale (52) übermittelt werden. Dies läßt sich zur Realisierung eines offenen Vermietbetriebes verwenden, bei dem es nicht notwendig ist, das genutzte Fahrzeug an einer Haltestelle abzugeben. Vielmehr kann das Fahrzeug an einem beliebigen Ort stehengelassen und von dort weitervermietet oder an einen anderen Ort überführt werden. Durch die Fernübertragung der begrenzten Fahrberechtigung sind die Autovermietfilialen völlig unabhängig von Personal und bestehen z.B. nur noch aus einer Haltestelle oder einem Abstellplatz, während die Übergabe der Fahrberechtigung ebenso wie die Fahrzeugdisposition und die Abrechnung mit dem Kunden von einer einzigen Vermietzentrale (52) vorgenommen werden kann.

In Fig. 4 ist ein demjenigen von Fig. 3 verwandtes Vermietsystem dargestellt, wobei für funktionell gleiche Komponenten dieselben Bezugszeichen verwendet sind und insoweit auf die Beschreibung von Fig. 3 verwiesen werden kann. Im Unterschied zum System von Fig. 3 beinhaltet das Vermietsystem von Fig. 4 ortsfest aufgestellte Haltestellenautomaten (58) mit Schlüsselprogrammiereinheiten (58a), die hinsichtlich der Schlüsselprogrammierung die Funktion des beim System nach Fig. 3 fahrzeugseitig untergebrachten Telematikmoduls (53) ausüben. Unter anderem beinhaltet die Schlüsselprogrammiereinheit (58a) des jeweiligen Haltestellenautomaten (58) eine Schnittstelle (58b) zur drahtlosen, manipulationsgeschützten Kommunikation mit dem jeweiligen Fahrzeugschlüssel (50) sowie eine Sende- und Empfangseinheit (58c) zur drahtlosen, manipulationsgeschützten Kommunikation mit der Vermietzentrale (52). Der Kunde lädt folglich bei diesem System seinen Fahrzeugschlüssel (50) jeweils an demjenigen Haltestellenautomat (58) mit der gewünschten Anzahl von Nutzungsberechtigungscodes, der sich an der Haltestelle befindet, an der er das Fahrzeug in Gebrauch nimmt, wozu dem Haltestellenautomat (58) die entsprechenden Daten zuvor von der Vermietzentrale (52) auf telefonische Mietanforderung durch den Kunden hin übermittelt werden. Im übrigen ergeben sich für dieses Vermietsystem die zum System von Fig. 3 genannten Eigenschaften und Vorteile.

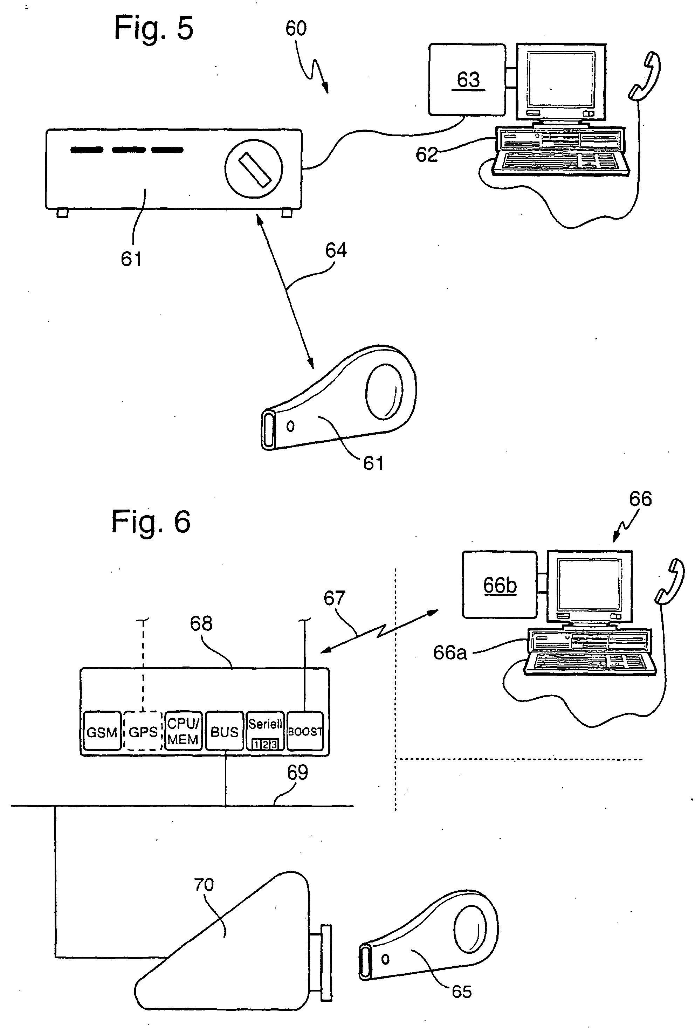

In Fig. 5 ist ein Fahrzeugvermietsystem gezeigt, bei dem der Fahrzeugvermieter in herkömmlicher Weise ein Fahrzeug samt Schlüssel an einer Mietstation (60) dem Kunden übergibt. Er überreicht dem Kunden jedoch nicht wie üblich einen Schlüssel mit unbegrenzter Nutzungsberechtigung für das Fahrzeug, sondern, entsprechend der Systeme der Fig. 3 und 4, einen Fahrzeugschlüssel (61) mit begrenzter Nutzungsberechtigung. Dazu verfügt die Mietstation über eine Schlüsselprogrammiereinheit in Form eines Schreib-/Lesegerätes (61), das an einen Rechner (62) mit zugeordnetem Schlüsselverwaltungsmodul (63) angeschlossen ist. In Abhängigkeit von der geplanten Fahrzeugnutzungsdauer wird mit dem Schreib-/Lesegerät (61) eine begrenzte Anzahl von Nutzungsberechtigungscodes, wie zu den Systemen der Fig. 3 und 4 beschrieben, auf einen noch nicht fahrberechtigenden Fahrzeugschlüssel (61) geschrieben, d.h. in diesen codegeschützt gemäß der Vorgehensweise der Fig. 1 und 2 über eine zugehörige Datenübertragungsstrecke (64) einprogrammiert. Dieser Schlüssel (61) wird dann dem Kunden zur begrenzten Fahrzeugnutzung zusammen mit dem Fahrzeug ausgehändigt. Ist die begrenzte Anzahl von Nutzungsberechtigungscodes aufgebraucht, so ist der Schlüssel (61) wertlos, d.h. es kann mit ihm weder die Zentralverriegelung, noch die Wegfahrsperre des Fahrzeugs betätigt werden. Da dies den Mietkunden bekannt ist, ist zu erwarten, daß diese von jeglichem Unterschlagungsversuch absehen.

Fig. 6 zeigt ein für Privatfahrzeuge geeignetes System mit hohem Diebstahlschutz dadurch, daß der oder die für das Fahrzeug verwendbaren Fahrzeugschlüssel (65) entsprechend den zuvor beschriebenen Systemen nur mit einer begrenzten Anzahl von Nutzungsberechtigungscodes geladen werden. Eine zugehörige Zentrale (66), die sich z.B. beim Fahrzeughersteller befinden kann und über einen Rechner (66a) mit angeschlossenem Schlüsselverwaltungsmodul (66b) verfügt, vergibt für jedes betreute Fahrzeug bedarfsorientiert eine begrenzte Anzahl von aufeinanderfolgenden Nutzungsberechtigungscodes, die drahtlos, z.B. über eine GSM-Datenfernübertragungsstrecke (67), an ein fahrzeugseitiges, nachrüstbares Telematikmodul (68) ähnlich demjenigen (53) in Fig. 3 übertragen werden. Das unter anderem als Schlüsselprogrammiereinheit fungierende Telematikmodul (68) lädt die zugehörigen Daten über ein Fahrzeugdatenbussystem (69) und ein Schließanlagen-Steuergerät (70) in den programmierbaren elektronischen Fahrzeugschlüssel (65). Das Schließanlagen-Steuergerät (70) ist in diesem Beispiel so ausgelegt, daß es die vom jeweiligen Schlüssel (65) zwecks Nutzungsberechtigungsfreigabe des Fahrzeugs ausgelösten Freigabeaktionen, d.h. die Anzahl der vom Schlüssel (65) abgesendeten Nutzungsberechtigungscodes, zählt und bei Überschreiten einer festlegbaren Schwelle ein Signal an das Telematikmodul (68) sendet, durch welches letzteres veranlaßt wird, bei der Zentrale (66) einen weiteren, nachfolgenden Satz von Nutzungsberechtigungscodes anzufordern. Dieser Vorgang erfolgt automatisiert und jeweils rechtzeitig vor dem vollständigen Verbrauch der momentan im Schlüssel (65) einprogrammierten Nutzungsberechtigungscodes, ohne daß der Kunde davon Notiz nimmt.

Liegt der Zentrale (66) eine Meldung über einen unberechtigten Gebrauch des zugehörigen Fahrzeugs vor, so sendet es den angeforderten Datensatz nicht mehr ab, was die Folge hat, daß nach Verbrauch der dann noch im Schlüssel (65) vorhandenen Nutzungsberechtigungscodes die elektronische Wegfahrsperre nicht mehr betätigt, insbesondere nicht mehr entsperrt werden kann. Dieselbe Wirkung tritt ein, wenn unberechtigerweise am Fahrzeug und dessen Kommunikationseinrichtungen so manipuliert wird, daß keine ordnungsgemäße Verbindung zwischen Fahrzeug und Zentrale (66) mehr zustande kommt, so daß dann auch keine Nutzungsberechtigungscodes mehr übermittelt werden können. Nur wenn keine derartigen Sperrmeldungen vorliegen, gibt die Zentrale (66) einen weiteren Satz von Nutzungsberechtigungscodes verschlüsselt an das Telematikmodul (68) ab, das diese Daten an das Schließanlagen-Steuergerät (70) weitergibt, welches sie über seine Infrarot- oder Induktivschnittstelle auf den Schlüssel (65) überträgt, in welchem sie dann entschlüsselt und hinterlegt werden, um weitere Nutzungsberechtigungsfreigabeaktionen zu ermöglichen. In einer Variante erfolgt das Zählen der verbrauchten Nutzungsberechtigungscodes und das Übermitteln eines entsprechenden Signals zur Übermittlung eines weiteren Satzen von Nutzungsberechtigungscodes durch den entsprechend ausgelegten Fahrzeugschlüssel selbst und nicht durch das Schließanlagen-Steuergerät. Es ist zu erwarten, daß nach Bekanntwerden derartiger Privatfahrzeugsysteme mit begrenzter Schlüsselnutzungsdauer die Gefahr von Versuchen, das Fahrzeug samt Schlüssel unberechtigterweise zu entwenden, deutlich sinkt.

## Patentansprüche (Patentansprüche für folgende(n) Vertragsstaat(en): ES)

1. Verfahren zur Einprogrammierung von Daten in ein jeweiliges Fahrzeugbauteil (4, 33), insbesondere ein Fahrzeugersatzteil, bei dem
- die Daten (18) bei einer Zentrale (20) anzufordern sind, welche die Daten an die anfordernde Stelle (1) absendet, wobei
- die Daten (18) von der Zentrale (20) wenigstens mit einem individuellen, fahrzeugbauteilbezogenen Code codiert abgesendet werden und
- die Decodierung der von der anfordernden Stelle empfangenen, mit dem fahrzeugbauteilbezogenen Code codierten Daten (15) erst im Fahrzeugbauteil (4, 33) selbst erfolgt.

2. Verfahren nach Anspruch 1, wobei weiter
- zur Anforderung der Daten bei der Zentrale (20) wenigstens Informationen über die Identität des Fahrzeugs, über die Identität des zu programmierenden Fahrzeugbauteils und über die Identität des anfordernden Systemnutzers an die Zentrale zu übermitteln sind und
- die Anforderungsinformationen von der Zentrale vor dem Codieren und Absenden der angeforderten Daten auf Berechtigung geprüft werden.

3. Verfahren nach Anspruch 1 oder 2, wobei weiter die von der Zentrale (20) abgesendeten, codierten Daten (15) von einem bei der anfordernden Stelle (1) vorhandenen Programmiergerät (3) in das hierzu an das Programmiergerät angeschlossene, zu programmierende Fahrzeugbauteil (4) eingespeist werden.

4. Verfahren nach Anspruch 1 oder 2, wobei weiter
- die mit dem fahrzeugbauteilbezogenen Code codierten Daten vor dem Absenden von der Zentrale (20) zusätzlich mit einem zwischenspeicherbauteilbezogenen Code codiert werden,
- die doppelt codierten Daten (15') nach Empfang durch die anfordernde Stelle (1) zunächst von einem bei dieser vorhandenen Programmiergerät (3) in ein an dieses angeschlossenes Zwischenspeicherbauteil (35) eingespeist und in letzterem bezüglich des zwischenspeicherbauteilbezogenen Codes decodiert und als noch mit dem fahrzeugbauteilbezogenen Code codierte Daten zwischengespeichert werden, und
- die noch mit dem fahrzeugbauteilbezogenen Code codierten Daten nach Anschluß des Zwischenspeicherbauteils an ein fahrzeugseitiges Datenübertragungssystem (32, 36), an welches das zu programmierende Fahrzeugbauteil (33) angeschlossen ist, aus dem Zwischenspeicherbauteil ausgelesen und über das fahrzeugseitige Datenübertragungssystem in das zu programmierende Fahrzeugbauteil eingespeist und dort vollends decodiert werden.

5. Verfahren nach einem der Ansprüche 2 bis 4, wobei weiter
- die zur Anforderung der einzuprogrammierenden Daten (18) an die Zentrale (20) zu übermittelnden Anforderungsdaten eine Kennnummerinformation (13, 13') eines anfordernden Fahrzeugschlüssels (4) oder Zwischenspeicherbauteils (35) beinhalten, und
- die von der Zentrale (20) abgesendeten Daten (18) eine Mobilitätsbegrenzungsinformation zur lediglich beschränkten Nutzungsberechtigungsfreigabe enthalten.

6. Verfahren nach Anspruch 5, wobei weiter die von der Zentrale (52) auf eine jeweiligen Anforderung hin abgesendeten, in einen Fahrzeugschlüssel (50) einzuprogrammierenden Daten nur eine vorgebbare Anzahl von Nutzungsberechtigungsfreigabeaktionen durch den Fahrzeugschlüssel zulassen.

7. Verfahren nach Anspruch 6, wobei weiter fahrzeugseitig die Anzahl stattgefundener Nutzungsberechtigungsfreigabeaktionen erfaßt und vor Erreichen der Anzahl der von den im Fahrzeugschlüssel (65) einprogrammierten Daten zugelassenen Nutzungsberechtigungsfreigabeaktionen eine Anforderungsinformation zur Zentrale (66) gesendet wird, die daraufhin nur bei Nichtvorliegen einer Sperrmeldung erneut Daten zur Einprogrammierung in den Fahrzeugschlüssel übermittelt, welche eine vorgebbare Anzahl weiterer Nutzungsberechtigungsfreigabeaktionen zulassen.

8. Einrichtung zur Einprogrammierung von Daten in ein jeweiliges Fahrzeugbauteil (4), insbesondere ein Fahrzeugersatzteil, wobei folgende Elemente zur Durchführung des Verfahrens nach einem der Ansprüche 1 bis 7 vorgesehen sind:
- eine Zentrale (20) mit Speichern (21, 22) für fahrzeugbezogene Daten (18) und für fahrzeugbauteilbezogene Codedaten (19) sowie mit einem Codierer (25) zur Codierung der in ein jeweiliges Fahrzeugbauteil (4) einzuprogrammierenden Daten (18),
- eine oder mehrere Servicestellen (1), die über eine Datenübertragungsstrecke (10) mit der Zentrale in Verbindung stehen und jeweils ein Programmiergerät (3) beinhalten, an welches das zu programmierende Fahrzeugbauteil (4) zur Einspeisung der empfangenen Daten (15) anschließbar ist, wobei
- das mit den Daten zu programmierende Fahrzeugbauteil (4) einen Decodierer (6) zur Decodierung der eingespeisten, mit dem fahrzeugbauteilbezogenen Code codierten Daten beinhaltet.

9. Einrichtung zur Einprogrammierung von Daten in ein jeweiliges Fahrzeugbauteil, insbesondere ein Fahrzeugersatzteil, wobei folgende Elemente zur Durchführung des Verfahrens nach einem der Ansprüche der 1 bis 7 vorgesehen sind:
- eine Zentrale (20) mit Speichern (21, 22') für fahrzeugbezogene Daten (18), für zwischenspeicherbauteilbezogene Codedaten (28) und für fahrzeugbauteilbezogene Codedaten (19) sowie mit einem Codierer (25) zur sukzessiven Codierung der in ein jeweiliges Fahrzeugbauteil (33) einzuprogrammierenden Daten (18) zuerst mit dem jeweiligen fahrzeugbauteilbezogenen Code und dann mit dem zwischenspeicherbauteilbezogenen Code und
- eine oder mehrere Servicestellen (1), die über eine Datenübertragungsstrecke (10) mit der Zentrale in Verbindung stehen und ein Programmiergerät (3) beinhalten, an welches ein Zwischenspeicherbauteil (35) zur Zuführung der empfangenen Daten (15') anschließbar ist, wobei
- das Zwischenspeicherbauteil (35) einen Decodierer (6) zur Decodierung der zugeführten, doppelt codierten Daten hinsichtlich des zwischenspeicherbauteilbezogenen Codes aufweist und die dann noch mit dem fahrzeugbauteilbezogenen Code codierten Daten zwischenspeichert und nach Anschluß an ein fahrzeugseitiges Datenübertragungssystem (36), an welches das mit den Daten zu programmierende Fahrzeugbauteil (33) angeschlossen ist, in letzteres einspeist und wobei
- das mit den Daten zu programmierende Fahrzeugbauteil einen De-. codierer (40) zur Decodierung der eingespeisten, mit dem fahrzeugbauteilbezogenen Code codierten Daten beinhaltet.

10. Einrichtung nach Anspruch 8 oder 9, wobei weiter die Zentrale (20) eine Anforderungsberechtigungs-Prüfeinheit (24) beinhaltet, welche die zur Anforderung von fahrzeugbezogenen Daten (18) für das jeweilige Fahrzeugbauteil (4) von einer Servicestelle (1) der Zentrale anzugebenden Informationen (12, 13, 14) hinsichtlich des betreffenden Fahrzeugs, des jeweiligen Fahrzeugbauteils sowie des Systemnutzers auf Berechtigung prüft.

11. Einrichtung nach einem der Ansprüche 8 bis 10, wobei weiter die Zentrale einen Rechner mit angeschlossenem Schlüsselverwaltungsmodul zur Abspeicherung und Übermittlung von jeweils einer begrenzten Anzahl aufeinanderfolgender Nutzungsberechtigungscodes zwecks Einprogrammierung in einen Fahrzeugschlüssel umfaßt, wobei als Servicestelle eine Schlüsselprogrammiereinheit (53, 58a, 61) dient, die sich im Fahrzeug, in einem jeweiligen Haltestellenautomat (58) oder in der Zentrale befindet.

12. Einrichtung nach Anspruch 11, wobei weiter vom Schlüssel selbst oder einer fahrzeugseitigen Einheit (70) die Anzahl der von einem jeweiligen Fahrzeugschlüssel (65) ausgelösten Nutzungsberechtigungsfreigabeaktionen erfaßt und vor Erreichen der zuvor in den Schlüssel einprogrammierten Anzahl von aufeinanderfolgend zu sendenden Nutzungsberechtigungscodes ein Anforderungssignal an die Zentrale (66) zur Übermittlung eines weiteren Satzes aufeinanderfolgender Nutzungsberechtigungscodes zwecks Einprogrammierung in den Schlüssel gesendet wird, wobei die Zentrale (66) einen entsprechenden Übermittlungsvorgang an das Nichtvorliegen einer zugehörigen Sperrmeldung koppelt.

## Patentansprüche (Patentansprüche für folgende(n) Vertragsstaat(en): DE, FR, GB, IT)

1. Verfahren zur Einprogrammierung von Daten in ein jeweiliges Fahrzeugbauteil (4, 33), insbesondere ein Fahrzeugersatzteil, bei dem
- die Daten (18) bei einer Zentrale (20) anzufordern sind, welche die Daten wenigstens mit einem individuellen, fahrzeugbauteilbezogenen Code codiert an die anfordernde Stelle (1) absendet, und
- die Decodierung der von der anfordernden Stelle empfangenen, mit dem fahrzeugbauteilbezogenen Code codierten Daten (15) erst im Fahrzeugbauteil (4, 33) selbst erfolgt,
- wobei zur Anforderung der Daten bei der Zentrale (20) wenigstens Informationen über die Identität des Fahrzeugs, über die Identität des zu programmierenden Fahrzeugbauteils und über die Identität des anfordernden Systemnutzers an die Zentrale zu übermitteln sind und die Anforderungsinformationen von der Zentrale vor dem Codieren und Absenden der angeforderten Daten auf Berechtigung geprüft werden.

2. Verfahren nach Anspruch 1, wobei weiter die von der Zentrale (20) abgesendeten, codierten Daten (15) von einem bei der anfordernden Stelle (1) vorhandenen Programmiergerät (3) in das hierzu an das Programmiergerät angeschlossene, zu programmierende Fahrzeugbauteil (4) eingespeist werden.

3. Verfahren zur Einprogrammierung von Daten in ein jeweiliges Fahrzeugbauteil (4, 33), insbesondere nach Anspruch 1 bei dem
- die Daten (18) bei einer Zentrale (20) anzufordern sind, welche die Daten wenigstens mit einem individuellen, fahrzeugbauteilbezogenen Code codiert an die anfordernde Stelle (1) absendet, und
- die Decodierung der von der anfordernden Stelle empfangenen, mit dem fahrzeugbauteilbezogenen Code codierten Daten (15) erst im Fahrzeugbauteil (4, 33) selbst erfolgt, wobei
- die mit dem fahrzeugbauteilbezogenen Code codierten Daten vor dem Absenden von der Zentrale (20) zusätzlich mit einem zwischenspeicherbauteilbezogenen Code codiert werden,
- die doppelt codierten Daten (15') nach Empfang durch die anfordernde Stelle (1) zunächst von einem bei dieser vorhandenen Programmiergerät (3) in ein an dieses angeschlossenes Zwischenspeicherbauteil (35) eingespeist und in letzterem bezüglich des zwischenspeicherbauteilbezogenen Codes decodiert und als noch mit dem fahrzeugbauteilbezogenen Code codierte Daten zwischengespeichert werden, und
- die noch mit dem fahrzeugbauteilbezogenen Code codierten Daten nach Anschluß des Zwischenspeicherbauteils an ein fahrzeugseitiges Datenübertragungssystem (32, 36), an welches das zu programmierende Fahrzeugbauteil (33) angeschlossen ist, aus dem Zwischenspeicherbauteil ausgelesen und über das fahrzeugseitige Datenübertragungssystem in das zu programmierende Fahrzeugbauteil eingespeist und dort vollends decodiert werden.

4. Verfahren nach einem der Ansprüche 1 bis 3, wobei weiter
- die zur Anforderung der einzuprogrammierenden Daten (18) an die Zentrale (20) zu übermittelnden Anforderungsdaten eine Kennnummerinformation (13, 13') eines anfordernden Fahrzeugschlüssels (4) oder Zwischenspeicherbauteils (35) beinhalten, und
- die von der Zentrale (20) abgesendeten Daten (18) eine Mobilitätsbegrenzungsinformation zur lediglich beschränkten Nutzungsberechtigungsfreigabe enthalten.

5. Verfahren nach Anspruch 4, wobei weiter die von der Zentrale (52) auf eine jeweiligen Anforderung hin abgesendeten, in einen Fahrzeugschlüssel (50) einzuprogrammierenden Daten nur eine vorgebbare Anzahl von Nutzungsberechtigungsfreigabeaktionen durch den Fahrzeugschlüssel zulassen.

6. Verfahren nach Anspruch 5, wobei weiter fahrzeugseitig die Anzahl stattgefundener Nutzungsberechtigungsfreigabeaktionen erfaßt und vor Erreichen der Anzahl der von den im Fahrzeugschlüssel (65) einprogrammierten Daten zugelassenen Nutzungsberechtigungsfreigabeaktionen eine Anforderungsinformation zur Zentrale (66) gesendet wird, die daraufhin nur bei Nichtvorliegen einer Sperrmeldung erneut Daten zur Einprogrammierung in den Fahrzeugschlüssel übermittelt, welche eine vorgebbare Anzahl weiterer Nutzungsberechtigungsfreigabeaktionen zulassen.

7. Einrichtung zur Einprogrammierung von Daten in ein jeweiliges Fahrzeugbauteil (4), insbesondere ein Fahrzeugersatzteil, wobei folgende Elemente zur Durchführung des Verfahrens nach einem der Ansprüche 1 bis 6 vorgesehen sind:
- eine Zentrale (20) mit Speichern (21, 22) für fahrzeugbezogene Daten (18) und für fahrzeugbauteilbezogene Codedaten (19) sowie mit einem Codierer (25) zur Codierung der in ein jeweiliges Fahrzeugbauteil (4) einzuprogrammierenden Daten (18),
- eine oder mehrere Servicestellen (1), die über eine Datenübertragungsstrecke (10) mit der Zentrale in Verbindung stehen und jeweils Mittel zur Übermittlung von Informationen wenigstens über die Identität des Fahrzeugs, über die Identität des zu programmierenden Fahrzeugbauteils und über die Identität des anfordernden Systemnutzers an die Zentrale zwecks Anforderung der einzuprogrammierenden Daten sowie ein Programmiergerät (3) beinhalten, an welches das zu programmierende Fahrzeugbauteil (4) zur Einspeisung der empfangenen Daten (15) anschließbar ist, wobei
- das mit den Daten zu programmierende Fahrzeugbauteil (4) einen Decodierer (6) zur Decodierung der eingespeisten, mit dem fahrzeugbauteilbezogenen Code codierten Daten beinhaltet.

8. Einrichtung zur Einprogrammierung von Daten in ein jeweiliges Fahrzeugbauteil, insbesondere ein Fahrzeugersatzteil, wobei folgende Elemente zur Durchführung des Verfahrens nach einem der Ansprüche der 1 bis 6 vorgesehen sind:
- eine Zentrale (20) mit Speichern (21, 22') für fahrzeugbezogene Daten (18), für zwischenspeicherbauteilbezogene Codedaten (28) und für fahrzeugbauteilbezogene Codedaten (19) sowie mit einem Codierer (25) zur sukzessiven Codierung der in ein jeweiliges Fahrzeugbauteil (33) einzuprogrammierenden Daten (18) zuerst mit dem jeweiligen fahrzeugbauteilbezogenen Code und dann mit dem zwischenspeicherbauteilbezogenen Code und
- eine oder mehrere Servicestellen (1), die über eine Datenübertragungsstrecke (10) mit der Zentrale in Verbindung stehen und ein Programmiergerät (3) beinhalten, an welches ein Zwischenspeicherbauteil (35) zur Zuführung der empfangenen Daten (15') anschließbar ist, wobei
- das Zwischenspeicherbauteil (35) einen Decodierer (6) zur Decodierung der zugeführten, doppelt codierten Daten hinsichtlich des zwischenspeicherbauteilbezogenen Codes aufweist und die dann noch mit dem fahrzeugbauteilbezogenen Code codierten Daten zwischenspeichert und nach Anschluß an ein fahrzeugseitiges Datenübertragungssystem (35), an welches das mit den Daten zu programmierende Fahrzeugbauteil (33) angeschlossen ist, in letzteres einspeist und wobei
- das mit den Daten zu programmierende Fahrzeugbauteil einen Decodierer (40) zur Decodierung der eingespeisten, mit dem fahrzeugbauteilbezogenen Code codierten Daten beinhaltet.

9. Einrichtung nach Anspruch 7 oder 8, wobei weiter die Zentrale (20) eine Anforderungsberechtigungs-Prüfeinheit (24) beinhaltet, welche die zur Anforderung von fahrzeugbezogenen Daten (18) für das jeweilige Fahrzeugbauteil (4) von einer Servicestelle (1) der Zentrale anzugebenden Informationen (12, 13, 14) hinsichtlich des betreffenden Fahrzeugs, des jeweiligen Fahrzeugbauteils sowie des Systemnutzers auf Berechtigung prüft.

10. Einrichtung nach einem der Ansprüche 7 bis 9, wobei weiter die Zentrale einen Rechner mit angeschlossenem Schlüsselverwaltungsmodul zur Abspeicherung und Übermittlung von jeweils einer begrenzten Anzahl aufeinanderfolgender Nutzungsberechtigungscodes zwecks Einprogrammierung in einen Fahrzeugschlüssel umfaßt, wobei als Servicestelle eine Schlüsselprogrammiereinheit (53, 58a, 61) dient, die sich im Fahrzeug, in einem jeweiligen Haltestellenautomat (58) oder in der Zentrale befindet.

11. Einrichtung nach Anspruch 10, wobei weiter vom Schlüssel selbst oder einer fahrzeugseitigen Einheit (70) die Anzahl der von einem jeweiligen Fahrzeugschlüssel (65) ausgelösten Nutzungsberechtigungsfreigabeaktionen erfaßt und vor Erreichen der zuvor in den Schlüssel einprogrammierten Anzahl von aufeinanderfolgend zu sendenden Nutzungsberechtigungscodes ein Anforderungssignal an die Zentrale (66) zur Übermittlung eines weiteren Satzes aufeinanderfolgender Nutzungsberechtigungscodes zwecks Einprogrammierung in den Schlüssel gesendet wird, wobei die Zentrale (66) einen entsprechenden Übermittlungsvorgang an das Nichtvorliegen einer zugehörigen Sperrmeldung koppelt.

## Claims (Claims for the following Contracting State(s): ES)

1. A process for programming data into a part (*4*, 33) for a motor vehicle, in particular a spare part for a motor vehicle, in which
- the data (18) has to be requested from a central unit (20) which sends the data to the requesting point (1) coded whereby
the data is sent at least with an individual, motor vehicle part-related code and
- the data (15) coded with the motor vehicle part-related code received by the requesting point is not decoded until it reaches the motor vehicle part (4, 33) itself

2. A process according to Claim 1, whereby in order to request the data from the central unit (20) it is necessary to send at least information on the identity of the vehicle, on the identity of the motor vehicle part to be programmed and on the identity of the system user making the request, and the information requested is checked for authorisation by the central unit before the requested data is coded and sent.

3. A process in accordance with claim 1 or claim 2, whereby in addition the coded data *(15)* sent by the central unit (20) is fed into a programming device (3) at the requesting point (1) in the motor vehicle part (4) which is connected to the programming device for this purpose.

4. A process according to Claim 1 or Claim 2, whereby
- the data coded with the motor vehicle part-related code is also coded with an intermediate storage component-related code before it is sent by the central unit (20),
- once it has been received by the requesting point (1), the double coded data (15') is then stored by a programming device (3) at the requesting point (1) in an intermediate storage component (35) connected thereto in which the intermediate storage component-related element of the code is decoded and the data still coded with the motor vehicle part-related code is temporarily stored, and
- following connection of the temporary storage component to the data transmission system (32, 36) of the motor vehicle to which the motor vehicle part (33) to be programmed is connected, the data still coded with the motor vehicle part-related code is read out of the temporary storage component and fed into the motor vehicle part to be programmed via the data transmission system of the motor vehicle where it is completely decoded.

5. A process according to any one of Claims 2 to 4, whereby
- the request data to be sent to the central unit (20) to request the data (18) to be programmed in contains identification number information (13, 13') relating to a requesting motor vehicle key (4) or temporary storage component (35), and
- the data sent by the central unit (20) contains mobility restricting information which permits only restricted authorisation release.

6. A process in accordance with claim 5, whereby in addition the data sent by the central unit (52) in relation to a particular request to be programmed into a motor vehicle key (50) permits only a pre-determinable number of authorisation release actions by the motor vehicle key.

7. A process in accordance with claim 6 whereby in addition the number of authorisation release actions which take place is recorded by the motor vehicle and before the number of authorisation release actions permitted by the data programmed into the motor vehicle key (65) is reached request information is sent to the central unit (66) which then sends data for programming into the motor vehicle key permitting a predeterminable number of further authorisation release actions again only when there is no barring message.

8. A device for programming data into a part (4) for a motor vehicle, in particular a spare part for a motor vehicle, with the following elements being provided to carry out the process in accordance with one of claims 1 to 7,
- a central unit (20) with storage devices (21, 22) for motor vehicle-related data (18) and for motor vehicle part-related code data (19) and with an encoder (25) for encoding the data (18) to be programmed into the motor vehicle part (4),
- one or more service points (1) which are connected to the central unit via a data transmission section (10) and each contain a programming device (3) to which the motor vehicle part (*4*) to be programmed can be connected to feed in the data (15) received, whereby
- the motor vehicle part (4) to be programmed with the data contains a decoder (6) to decode the data coded with the motor vehicle part-related code which is fed in.

9. A device for programming data into a part for a motor vehicle, in particular a spare part for a motor vehicle, with the following elements being provided to carry out the process in accordance with one of claims 1 to 7:
- a central unit (20) with memories (21, 22') for motor vehicle-related data (18) and for motor vehicle part-related code data (19) and with an encoder (25) for the successive encoding of the data (18) to be programmed into a motor vehicle part (33) first with the relevant motor vehicle part-related code and then with the temporary storage component-related code and
- one or more service points (1) which are connected to the central unit (1) via a data transmission section (10) and contain a programming device (3) to which a temporary storage component (35) can be connected to feed in the data (15') received, whereby
- the temporary storage component (35) has a decoder (6) to decode the temporary storage component-related element of the double coded data fed into it and the data which is still coded with the motor vehicle part-related code is temporarily stored and, following connection to a data transmission system (36) on the motor vehicle to which the motor vehicle part (33) to be programmed with the data is connected, fed into the latter, and whereby the motor vehicle part to be programmed with the data contains a decoder (40) to decode the data coded with the motor vehicle part-related code which is fed in.

10. A device in accordance with claim 8 or 9, whereby in addition the central unit (20) contains a request authorisation checking unit (24) which checks the information (12, 13, 14) requesting motor vehicle-related information for the motor vehicle part (4) in question to be given by a service point (1) to the central unit in relation to the vehicle in question, the motor vehicle part and the system user for authority.

11. A device in accordance with one of claims 8 to 10, whereby in addition the central unit (20) comprises a computer with a connected key management module for storing and transmitting a limited number of consecutive authorisation codes to be programmed into a motor vehicle key with a key programming unit (53, 58a, 61) located in the motor vehicle, in an automatic service point (58) or in the central unit serving as the service point.

12. A device in accordance with claim 11, whereby in addition the number of authorisation release actions (65) triggered by a motor vehicle key (65) is recorded by the key itself or by a unit (70) fitted to the motor vehicle and before the number of consecutive authorisation codes to be sent previously programmed into the key is reached a request signal is sent to the central unit (66) to transmit a further set of consecutive authorisation codes to be programmed into the key with the central unit (66) linking the relevant transmission process to the absence of a corresponding barring message.

## Claims (Claims for the following Contracting State(s): DE, FR, GB, IT)

1. A process for programming data into a part (4, 33) for a motor vehicle, in particular a spare part for a motor vehicle, in which
- the data (18) has to be requested from a central unit (20) which sends the data to the requesting point (1) coded at least with an individual, motor vehicle part-related code, and
- the data (15) coded with the motor vehicle part-related code received by the requesting point is not decoded until it reaches the motor vehicle part (4, 33) itself,
- whereby in order to request the data from the central unit (20) it is necessary to send at least information on the identity of the vehicle, on the identity of the motor vehicle part to be programmed and on the identity of the system user making the request, and the information requested is checked for authorisation by the central unit before the requested data is coded and sent.

2. A process in accordance with claim 1,
whereby in addition the coded data (15) sent by the central unit (20) is fed into a programming device (3) at the requesting point (1) in the motor vehicle part (4) which is connected to the programming device for this purpose.

3. A process for programming data into a part (4, 33) for a motor vehicle, in particular in accordance with claim 1, in which
- the data (18) has to be requested from a central unit (20) which sends the data to the requesting point (1) coded at least with an individual, motor vehicle part-related code, and
- the data (15) coded with the motor vehicle part-related code received by the requesting point is not decoded until it reaches the motor vehicle part (4, 33) itself, whereby
- the data coded with the motor vehicle part-related code is also coded with an intermediate storage component-related code before it is sent by the central unit (20),
- once it has been received by the requesting point (1), the double coded data (15') is then stored by a programming device (3) at the requesting point (1) in an intermediate storage component (35) connected thereto in which the intermediate storage component-related element of the code is decoded and the data still coded with the motor vehicle part-related code is temporarily stored, and
- following connection of the temporary storage component to the data transmission system (32, 36) of the motor vehicle to which the motor vehicle part (33) to be programmed is connected, the data still coded with the motor vehicle part-related code is read out of the temporary storage component and fed into the motor vehicle part to be programmed via the data transmission system of the motor vehicle where it is completely decoded.

4. A process in accordance with one of claims 1 to 3, whereby in addition
- the request data to be sent to the central unit (20) to request the data (18) to be programmed in contains identification number information (13, 13') relating to a requesting motor vehicle key (4) or temporary storage component (35), and
- the data sent by the central unit (20) contains mobility restricting information which permits only restricted authorisation release.

5. A process in accordance with claim 4, whereby in addition
the data sent by the central unit (52) in relation to a particular request to be programmed into a motor vehicle key (50) permits only a pre-determinable number of authorisation release actions by the motor vehicle key.

6. A process in accordance with claim 5, whereby in addition
the number of authorisation release actions which take place is recorded by the motor vehicle and before the number of authorisation release actions permitted by the data programmed into the motor vehicle key (65) is reached request information is sent to the central unit (66) which then sends data for programming into the motor vehicle key permitting a pre-determinable number of further authorisation release actions again only when there is no barring message.

7. A device for programming data into a part (4) for a motor vehicle, in particular a spare part for a motor vehicle, with the following elements being provided to carry out the process in accordance with one of claims 1 to 6,
- a central unit (20) with storage devices (21, 22) for motor vehicle-related data (18) and for motor vehicle part-related code data (19) and with an encoder (25) for encoding the data (18) to be programmed into the motor vehicle part (4),
- one or more service points (1) which are connected to the central unit via a data transmission section (10) and each contain means for transmitting information at least on the identity of the motor vehicle, on the identity of the motor vehicle part to be programmed and on the identity of the system user making the request to the central unit in order to request the data to be programmed in, and a programming device (3) to which the motor vehicle part (4) to be programmed can be connected to feed in the data (15) received, whereby
- the motor vehicle part (4) to be programmed with the data contains a decoder (6) to decode the data coded with the motor vehicle part-related code which is fed in.

8. A device for programming data into a part for a motor vehicle, in particular a spare part for a motor vehicle, with the following elements being provided to carry out the process in accordance with one of claims 1 to 6:
- a central unit (20) with memories (21, 22') for motor vehicle-related data (18), for temporary storage component-related code data (28) and for motor vehicle part-related code data (19) and with an encoder (25) for the successive encoding of the data (18) to be programmed into a motor vehicle part (33) first with the relevant motor vehicle part-related code and then with the temporary storage component-related code and
- one or more service points (1) which are connected to the central unit (1) via a data transmission section (10) and contain a programming device (3) to which a temporary storage component (35) can be connected to feed in the data (15') received, whereby
- the temporary storage component (35) has a decoder (6) to decode the temporary storage component-related element of the double coded data fed into it and the data which is still coded with the motor vehicle part-related code is temporarily stored and, following connection to a data transmission system (36) on the motor vehicle to which the motor vehicle part (33) to be programmed with the data is connected, fed into the latter, and whereby
- the motor vehicle part to be programmed with the data contains a decoder (40) to decode the data coded with the motor vehicle part-related code which is fed in.

9. A device in accordance with claim 7 or 8, whereby in addition
the central unit (20) contains a request authorisation checking unit (24) which checks the information (12, 13, 14) requesting motor vehicle-related information for the motor vehicle part (4) in question to be given by a service point (1) to the central unit in relation to the vehicle in question, the motor vehicle part and the system user for authority.

10. A device in accordance with one of claims 7 to 9, whereby in addition the central unit (20) comprises a computer with a connected key management module for storing and transmitting a limited number of consecutive authorisation codes to be programmed into a motor vehicle key with a key programming unit (53, 58a, 61) located in the motor vehicle, in an automatic service point (58) or in the central unit serving as the service point.

11. A device in accordance with claim 10, whereby in addition
the number of authorisation release actions (65) triggered by a motor vehicle key (65) is recorded by the key itself or by a unit (70) fitted to the motor vehicle and before the number of consecutive authorisation codes to be sent previously programmed into the key is reached a request signal is sent to the central unit (66) to transmit a further set of consecutive authorisation codes to be programmed into the key with the central unit (66) linking the relevant transmission process to the absence of a corresponding barring message.

## Revendications (Revendications pour l'(les) Etat(s) contractant(s) suivant(s): ES)

1. Procédé de programmation de données dans un composant de véhicule (4, 33) respectif, en particulier une pièce de rechange de véhicule, dans lequel
- les données (18) sont à demander à une centrale (20), qui envoie les données au point (1) demandeur, où
- les données (18) sont envoyées par la centrale (20) de façon codée au moins avec un code individuel, se référant au composant du véhicule,
- le décodage des données (15) codées avec le code lié au composant du véhicule, reçues du point demandeur, est ensuite effectué, dans le composant de véhicule (4, 33) lui-même.

2. Procédé selon la revendication 1, dans lequel, en outre,
- pour demander les données auprès de la centrale (20), doivent être transmises à la centrale au moins des informations concernant l'identité du véhicule, l'identité du composant de véhicule à programmer et l'identité de l'utilisateur-système demandeur, et
- les informations de requête sont vérifiée par la centrale avant le codage et l'envoi des données demandées, quant à l'autorisation nécessaire.

3. Procédé selon la revendication 1 ou 2, dans lequel, en outre les données (15) codées, envoyées par la centrale (20), sont injectées, par un appareil de programmation (3) présent au point (1) demandeur, dans le composant du véhicule (4) à programmer, raccordé à cette fin à l'appareil de programmation.

4. Procédé selon la revendication 1 ou 2, dans lequel, en outre
- les données, codées avec le code lié à un composant de véhicule, sont codées avant l'envoi, par la centrale (20), à titre supplémentaire, sous un code lié au composant à mémoire intermédiaire,
- les données (15') ayant été soumises à un codage double, après réception par le point (1) demandeur, sont d'abord injectées par un appareil de programmation (3) présent à ce point, dans un composant à mémoire intermédiaire (35) raccordé à celui-ci, et décodées dans ce dernier, quand au code se référant au composant à mémoire intermédiaire, et mises en stockage intermédiaire à titre de données, encore codées avec le code lié au composant de véhicule, et
- les données, codées sous le code se référant au composant de véhicule, après raccordement du composant à mémoire intermédiaire à un système de transmission de données (32, 36) situé côté véhicule, auquel le composant de véhicule (33) à programmer est raccordé, sont lues depuis le composant à mémoire intermédiaire et injectées, par l'intermédiaire du système de transmission de données situé côté véhicule, dans le composant de véhicule à programmer et y sont entièrement décodées.

5. Procédé selon l'une des revendications 2 à 4, dans lequel, en outre
- les données de requête, à transmettre à la centrale (20) pour demander les données (18) à programmer, contiennent une information de numéro caractéristique (13, 13') d'une clé de véhicule (4) utilisée pour la requête ou d'un composant à mémoire intermédiaire (35), et
- les données (18) envoyées par la centrale (20) contiennent une information de limitation de mobilité pour provoquer uniquement un déblocage d'autorisation d'utilisation limité.

6. Procédé selon la revendication 5, dans lequel, en outre, les données à programmer dans une clé de véhicule (50), envoyées par la centrale (52) suite à une requête spécifique, ne permettent qu'un nombre, susceptible d'être prédéterminé, d'actions de déblocage d'autorisation d'utilisation par la clé de véhicule.

7. Procédé selon la revendication 6, dans lequel, en outre,
côté véhicule le nombre de réactions de déblocages d'autorisation d'utilisation s'étant produit est appréhendé et, avant atteinte du nombre des actions de déblocages d'autorisation d'utilisation admis par les données programmées dans la clé de véhicule (65), une information de requête est envoyée à la centrale (66) qui, suite à cela, ne transmet de nouveau des données pour la programmation dans la clé du véhicule qu'en cas de non-présence d'une information de blocage, données admettant un nombre, susceptible d'être prédéterminé, d'autres actions de déblocages d'autorisation d'utilisation.

8. Dispositif de programmation de données dans un composant de véhicule (4) spécifique, en particulier une pièce de rechange de véhicule, où les éléments suivants sont prévus pour mettre en oeuvre le procédé selon l'une des revendications 1 à 7 :
- une centrale (20) avec des mémoires (21, 22) pour des données (18) liées au véhicule et pour des données de code (19) se référant au composant de véhicule, ainsi qu'avec un codeur (25) pour effectuer le codage des données (18) à programmer dans le composant de véhicule (4) respectif,
- un ou plusieurs points de fourniture de service (1), reliés à la centrale par une voie de transmission de données (10) et contenant chacun un appareil de programmation (3) auquel le composant de véhicule (4) à programmer est susceptible d'être raccordé pour injecter des données (15) reçues, où
- le composant de véhicule (4) à programmer avec les données contient un décodeur (6) pour effectuer le décodage des données injectées, codées avec le code se référant au composant de véhicule.

9. Dispositif de programmation de données dans un composant de véhicule spécifique en particulier une pièce de rechange de véhicule, dans lequel les éléments suivants sont prévus pour la mise en oeuvre du procédé selon l'une des revendications 1 à 7 :
- une centrale (20) avec des mémoires (21, 22') pour des données (18) se référant au véhicule, pour des données de code (28), se référant au composant à mémoire intermédiaire, et pour des données de code (19) se référant au composant de véhicule, ainsi qu'avec un codeur (25) pour procéder au codage successif des données (18) à programmer dans un composant de véhicule (3) spécifique, d'abord avec le code spécifique se référant au composant de véhicule, puis avec le code se référant au composant à mémoire intermédiaire, et
- un ou plusieurs points de fourniture de service (1), reliés à la centrale par une voie de transmission de données (10) et contenant un appareil de programmation (3) auquel un composant à mémoire intermédiaire (35) est susceptible d'être raccordé pour amener les données (15) ayant été reçues, où
- le composant à mémoire intermédiaire (35) présente un décodeur (6) pour procéder au décodage des données fournies, ayant subi un codage double, du point de vue du code se référant au composant à mémoire intermédiaire et les données, qui sont alors encore codées avec le code se référant au composant de véhicule, étant mises en mémoire intermédiaire et, après raccordement à un système de transmission de données (36) situé côté véhicule, auquel le composant de véhicule (33) à programmer avec les données est raccordé, sont injectées dans ce dernier, et où
- le composant de véhicule à programmer avec les données contient un décodeur (40) pour procéder au décodage des données injectées, codées avec le code se référant au composant de véhicule.

10. Dispositif selon la revendication 8 ou 9 dans lequel, en outre,
la centrale (20) contient une unité de vérification d'autorisation de requête (24), qui vérifie l'autorisation dont bénéficient les informations (12, 13, 14), à indiquer pour demander des données (18) concernant le véhicule, pour chaque composant de véhicule (4), depuis un point de fourniture de service (1) de la centrale, informations concernant le véhicule concerné, le composant de véhicule spécifique, ainsi que l'utilisateur du système.

11. Dispositif selon l'une des revendications 8 à 10, dans lequel, en outre,
la centrale comprend un ordinateur auquel est raccordé un module de gestion de clé, pour mémoriser et transmettre chaque fois un nombre, limité, de codes d'autorisation d'utilisation successifs dans le but de programmation dans une clé de véhicule, étant utilisée comme point de fourniture de service une unité de programmation de clé (53, 58a, 61) qui se trouve dans le véhicule, dans un appareil automatique (58) spécifique installé dans un point de halte, ou bien dans la centrale..

12. Dispositif selon la revendication 11, dans lequel, en outre, depuis la clé elle-même ou bien depuis une unité (70) située côté véhicule, le nombre des actions de déblocage d'autorisation d'utilisation, déclenchées par une clé de véhicule (65) spécifique, est appréhendé et, avant atteinte du nombre précédemment, programmé dans la clé, de codes d'autorisation d'utilisation à envoyer les uns à la suite des autres, un signal de requête est envoyé à la centrale (66), dans le but de transmettre un autre jeu de codes d'utilisation subséquent, dans le but de programmation dans la clé, la centrale (66) couplant un processus de transmission correspondant à la situation de non-présence d'une information de blocage afférente.

## Revendications (Revendications pour l'(les) Etat(s) contractant(s) suivant(s): DE, FR, GB, IT)

1. Procédé de programmation de données dans un composant de véhicule (4, 33) respectif, en particulier une pièce de rechange de véhicule, dans lequel
- les données (18) sont à demander à une centrale (20), qui envoie au point (1) demandeur les données, codées au moins avec un code individuel, se référant au composant de véhicule, et
- le décodage des données (15) codées avec le code lié au composant du véhicule, reçues du point demandeur, est ensuite effectué, dans le composant de véhicule (4, 33) lui-même,
- où, pour demander les données auprès de la centrale (20), doivent être transmises à la centrale au moins des informations concernant l'identité du véhicule, l'identité du composant de véhicule à programmer et l'identité de l'utilisateur-système demandeur, et les informations de requête sont vérifiée par la centrale avant le codage et l'envoi des données demandées, quant à l'autorisation nécessaire.

2. Procédé selon la revendication 1, dans lequel, en outre, les données (15) codées, envoyées par la centrale (20), sont injectées, par un appareil de programmation (3) présent au point (1) demandeur dans le composant du véhicule (4) à programmer, raccordé à cette fin à l'appareil de programmation.

3. Procédé de programmation de données dans un composant de véhicule (4, 33) respectif en particulier selon la revendication 1, dans lequel
- les données (18) sont à demander à une centrale (20), qui envoie au point (1) demandeur les données, codées au moins avec un code individuel, se référant au composant de véhicule, et
- le décodage des données (15) codées avec le code lié au composant du véhicule, reçues du point demandeur, est ensuite effectué, dans le composant de véhicule (4, 33) lui-même, où
- les données, codées avec le code lié à un composant de véhicule, sont codées avant l'envoi, par la centrale (20), à titre supplémentaire, sous un code lié au composant à mémoire intermédiaire,
- les données (15') ayant été soumises à un codage double, après réception par le point (1) demandeur, sont d'abord injectées par un appareil de programmation (3) présent à ce point, dans un composant à mémoire intermédiaire (35) raccordé à celui-ci, et décodées dans ce dernier, quand au code se référant au composant à mémoire intermédiaire, et mises en stockage intermédiaire à titre de données, encore codées avec le code lié au composant de véhicule, et
- les données, codées sous le code se référant au composant de véhicule, après raccordement du composant à mémoire intermédiaire à un système de transmission de données (32, 36) situé côté véhicule, auquel le composant de véhicule (33) à programmer est raccordé, sont lues depuis le composant à mémoire intermédiaire et injectées, par l'intermédiaire du système de transmission de données situé côté véhicule, dans le composant de véhicule à programmer et y sont entièrement décodées.

4. Procédé selon l'une des revendications 1 à 3, dans lequel, en outre
- les données de requête, à transmettre à la centrale (20) pour demander les données (18) à programmer, contiennent une information de numéro caractéristique (13, 13') d'une clé de véhicule (4) utilisée pour la requête ou d'un composant à mémoire intermédiaire (35), et
- les données (18) envoyées par la centrale (20) contiennent une information de limitation de mobilité pour provoquer uniquement un déblocage d'autorisation d'utilisation limité.

5. Procédé selon la revendication 4, dans lequel, en outre, les données à programmer dans une clé de véhicule (50), envoyées par la centrale (52) suite à une requête spécifique, ne permettent qu'un nombre, susceptible d'être prédéterminé, d'actions de déblocage d'autorisation d'utilisation par la clé de véhicule.

6. Procédé selon la revendication 5, dans lequel, en outre, côté véhicule le nombre de réactions de déblocages d'autorisation d'utilisation s'étant produit est appréhendé et, avant atteinte du nombre des actions de déblocages d'autorisation d'utilisation admis par les données programmées dans la clé de véhicule (65), une information de requête est envoyée à la centrale (66) qui, suite à cela, ne transmet de nouveau des données pour la programmation dans la clé du véhicule qu'en cas de non-présence d'une information de blocage, données admettant un nombre, susceptible d'être prédéterminé, d'autres actions de déblocages d'autorisation d'utilisation.

7. Dispositif de programmation de données dans un composant de véhicule (4) spécifique, en particulier une pièce de rechange de véhicule, où les éléments suivants sont prévus pour mettre en oeuvre le procédé selon l'une des revendications 1 à 6 :
- une centrale (20) avec des mémoires (21, 22) pour des données (18) liées au véhicule et pour des données de code (19) se référant au composant de véhicule, ainsi qu'avec un codeur (25) pour effectuer le codage des données (18) à programmer dans le composant de véhicule (4) respectif,
- un ou plusieurs points de fourniture de service (1), reliés à la centrale par une voie de transmission de données (10) et contenant chacun des moyens de transmission à la centrale d'informations au moins concernant l'identité du véhicule, l'identité du composant de véhicule à programmer et l'identité de l'utilisateur-système faisant la demande, dans le but de demander les données à programmer, ainsi que contenant un appareil de programmation (3) auquel le composant de véhicule (4) à programmer est susceptible d'être raccordé pour injecter des données (15) reçues, où
- le composant de véhicule (4) à programmer avec les données contient un décodeur (6) pour effectuer le décodage des données injectées, codées avec le code se référant au composant de véhicule.

8. Dispositif de programmation de données dans un composant de véhicule spécifique en particulier une pièce de rechange de véhicule, dans lequel les éléments suivants sont prévus pour la mise en oeuvre du procédé selon l'une des revendications 1 à 6 :
- une centrale (20) avec des mémoires (21, 22') pour des données (18) se référant au véhicule, pour des données de code (28), se référant au composant à mémoire intermédiaire, et pour des données de code (19) se référant au composant de véhicule, ainsi qu'avec un codeur (25) pour procéder au codage successif des données (18) à programmer dans un composant de véhicule (3) spécifique, d'abord avec le code spécifique se référant au composant de véhicule, puis avec le code se référant au composant à mémoire intermédiaire, et
- un ou plusieurs points de fourniture de service (1), reliés à la centrale par une voie de transmission de données (10) et contenant un appareil de programmation (3) auquel un composant à mémoire intermédiaire (35) est susceptible d'être raccordé pour amener les données (15) ayant été reçues, où
- le composant à mémoire intermédiaire (35) présente un décodeur (6) pour procéder au décodage des données fournies, ayant subi un codage double, du point de vue du code se référant au composant à mémoire intermédiaire et les données, qui sont alors encore codées avec le code se référant au composant de véhicule, étant mises en mémoire intermédiaire et, après raccordement à un système de transmission de données (36) situé côté véhicule, auquel le composant de véhicule (33) à programmer avec les données est raccordé, sont injectées dans ce dernier, et où
- le composant de véhicule à programmer avec les données contient un décodeur (40) pour procéder au décodage des données injectées, codées avec le code se référant au composant de véhicule.

9. Dispositif selon la revendication 7 ou 8 dans lequel, en outre,
la centrale (20) contient une unité de vérification d'autorisation de requête (24), qui vérifie l'autorisation dont bénéficient les informations (12, 13, 14), à indiquer pour demander des données (18) concernant le véhicule, pour chaque composant de véhicule (4), depuis un point de fourniture de service (1) de la centrale, informations concernant le véhicule concerné, le composant de véhicule spécifique, ainsi que l'utilisateur du système.

10. Dispositif selon l'une des revendications 7 à 9, dans lequel, en outre,
la centrale comprend un ordinateur auquel est raccordé un module de gestion de clé, pour mémoriser et transmettre chaque fois un nombre, limité, de codes d'autorisation d'utilisation successifs dans le but de programmation dans une clé de véhicule, étant utilisée comme point de fourniture de service une unité de programmation de clé (53, 58a, 61) qui se trouve dans le véhicule, dans un appareil automatique (58) spécifique installé dans un point de halte, ou bien dans la centrale.

11. Dispositif selon la revendication 10, dans lequel, en outre, depuis la clé elle-même ou bien depuis une unité (70) située côté véhicule, le nombre des actions de déblocage d'autorisation d'utilisation, déclenchées par une clé de véhicule (65) spécifique, est appréhendé et, avant atteinte du nombre précédemment, programmé dans la clé, de codes d'autorisation d'utilisation à envoyer les uns à la suite des autres, un signal de requête est envoyé à la centrale (66), dans le but de transmettre un autre jeu de codes d'utilisation subséquent, dans le but de programmation dans la clé, la centrale (66) couplant un processus de transmission correspondant à la situation de non-présence d'une information de blocage afférente.
